# EUROPEAN PATENT APPLICATION

(11) **EP 4 848 799 A1**
(43) Date of publication of application: **02.12.2026**
(21) Application number: 24926912.7
(22) Date of filing: 24.12.2024
(51) Int. Cl.: H04W 28/02, H04W 28/06

(54) **COMMUNICATION METHOD AND APPARATUS**

(30) Priority: 29.02.2024 CN 202410246002
(71) Applicant: Huawei Technologies Co., Ltd., Shenzhen, Guangdong 518129 (CN)
(72) Inventor: ZHANG, Haisen, Shenzhen, Guangdong 518129 (CN); LI, Chenwan, Shenzhen, Guangdong 518129 (CN); CHEN, Lei, Shenzhen, Guangdong 518129 (CN)
(74) Representative: Epping - Hermann - Fischer
(86) International application number: PCT/CN2024/141977
(87) International publication number: WO 2025/180054

(57) **Abstract**

This application relates to the field of communication technologies, and provides a communication method and apparatus, to simplify RLC segmentation and reduce processing complexity, thereby meeting communication requirements in future new service scenarios, such as RFID systems or A-IoT scenarios. The method includes: A first communication apparatus obtains M radio link control protocol data units RLC PDUs, and sends the M RLC PDUs to a second communication apparatus. The M RLC PDUs are obtained by segmenting one radio link control service data unit RLC SDU based on a preset data size and/or a preset segment quantity, and M is an integer greater than 1.

## Description

This application claims priority to Chinese Patent Application No. 202410246002.2, filed with the China National Intellectual Property Administration on February 29, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Because of advantages of passive radio frequency identification (radio frequency identification, RFID) technologies in low power consumption, the ambient internet of things (Ambient IoT, A-IoT) has emerged. To meet ultra-low power consumption requirements, terminal devices in the ambient internet of things use low-precision medium-to-low frequency ring oscillators with low power consumption to receive downlink signals or receive downlink signals without any local oscillator, thereby further reducing downlink receiving power consumption of the terminal device. Currently, the 3rd generation partnership project (3rd generation partnership project, 3GPP) defines A-IoT, which can be understood as an extension of RFID in 3GPP. For example, A-IoT is based on cellular network communication infrastructure, consisting of a reader (such as a base station) and a passive/semi-passive/active tag (the tag is a terminal in a cellular network, understood as an internet of things terminal with extremely low power consumption and extremely low complexity). Main services include inventory, positioning, sensing, and command, among others. Typical application scenarios include logistics, warehousing, industrial manufacturing, identification, and environment monitoring.

However, the processing manner currently defined in 3GPP exhibits high complexity, which may fail to meet transmission requirements of A-IoT.

### SUMMARY

Embodiments of this application provide a communication method and apparatus, to simplify radio link control RLC segmentation and reduce processing complexity.

To achieve the foregoing objectives, this application uses the following technical solutions.

According to a first aspect, a communication method is provided, applied to a first communication apparatus. The method includes: The first communication apparatus obtains M radio link control protocol data units RLC PDUs, and sends the M RLC PDUs to a second communication apparatus. The M RLC PDUs are obtained by segmenting one radio link control service data unit RLC SDU based on a preset data size and/or a preset segment quantity, and M is an integer greater than 1. It may be understood that the M RLC PDUs may be M UMD PDUs or M AMD PDUs. That the first communication apparatus obtains the M RLC PDUs may be understood as that an RLC entity of the first communication apparatus obtains the M RLC PDUs by segmenting the RLC SDU, or the RLC SDU is segmented in advance to obtain the M RLC PDUs. The M RLC PDUs may be stored in a storage area. When a transmission occasion arrives or is to arrive, the RLC entity of the first communication apparatus obtains the M RLC PDUs from the storage area. There may be a plurality of RLC SDUs, and the plurality of RLC SDUs may belong to a same DRB. RLC SDUs of a same DRB may be segmented in the manner in this embodiment of this application, that is, based on the preset data size and/or the preset segment quantity, and RLC SDUs of different DRBs may be segmented in different manners. Alternatively, the plurality of RLC SDUs may belong to a plurality of DRBs. These DRBs may correspond to a same service or a plurality of services, and RLC SDUs of different services may be segmented in a same manner or different manners.

It can be learned that the first communication apparatus may segment the one RLC SDU into the M RLC PDUs in a non-flexible or fixed manner, for example, based on the preset data size and/or the preset segment quantity, and send the M RLC PDUs to the second communication apparatus. Correspondingly, the second communication apparatus receives the M RLC PDUs from the first communication apparatus, and the second communication apparatus may also assemble the M RLC PDUs in a fixed manner, to obtain the one RLC SDU. This simplifies RLC segmentation and reduces processing complexity, thereby meeting communication requirements in future new service scenarios, such as RFID systems or A-IoT scenarios.

In a possible design solution, sizes of at least some of the M RLC PDUs are the same, for example, data amounts or data lengths of the RLC PDUs are the same. Specifically, payload parts of the RLC PDUs may be the same (whether sizes of headers of the RLC PDUs are the same is not limited), or overall sizes of the RLC PDUs may be the same, that is, sizes of payloads and headers are the same. This may be specifically selected flexibly based on an actual situation. This is not limited herein.

In a possible design solution, the preset data size is determined based on at least one of the following: a size of the RLC SDU, quality of communication between the first communication apparatus and the second communication apparatus, and a coverage enhancement level CE of the first communication apparatus or the second communication apparatus. The size of the RLC SDU may be positively correlated with the preset data size, so that a segment quantity is fixed as the size of the RLC SDU changes, thereby avoiding excessively high transmission complexity caused by an excessively large segment quantity. The quality of communication between the first communication apparatus and the second communication apparatus may be positively correlated with the preset data size. For example, better quality of communication between the first communication apparatus and the second communication apparatus means that communication complexity may be higher, and the preset data size may also be larger. In NB-IoT, the CE is divided into three levels, ranging from 0 to 2, which correspond to signal attenuation of 144 dB, 154 dB, and 164 dB that can be resisted respectively. In other words, a higher CE level indicates a stronger capability of resisting a signal attenuation, which means that communication complexity may be higher, and the preset data size may also be larger.

In a possible design solution, the preset segment quantity is determined based on at least one of the following: a size of the RLC SDU, quality of communication between the first communication apparatus and the second communication apparatus, and a CE of the first communication apparatus or the second communication apparatus. The size of the RLC SDU may be positively correlated with the preset segment quantity, so that a segment size is fixed as the size of the RLC SDU changes, thereby avoiding excessively high transmission complexity caused by an excessively large segment. The quality of communication between the first communication apparatus and the second communication apparatus may be positively correlated with the preset segment quantity. For example, better quality of communication between the first communication apparatus and the second communication apparatus means that communication complexity may be higher, and the preset segment quantity may also be larger. Similar to the foregoing description, a higher CE level indicates a stronger capability of resisting a signal attenuation, which means that communication complexity may be higher, and the preset segment quantity may also be smaller, so that each segment may be longer.

In a possible design solution, the method according to the first aspect may further include: The first communication apparatus sends first configuration information to the second communication apparatus, where the first configuration information indicates that segmentation of an RLC SDU is based on a segment data size and/or a segment quantity. The RLC SDU segmentation is a manner in which the RLC SDU is segmented, to implement segmentation alignment and avoid a transmission error.

Optionally, the method according to the first aspect may further include: The first communication apparatus sends second configuration information to the second communication apparatus, where the second configuration information indicates that the segment data size is the preset data size and/or the segment quantity is the preset segment quantity. The second configuration information and the first configuration information may be carried in a same message, to reduce a quantity of communication times and reduce overheads. Alternatively, the second configuration information and the first configuration information may be carried in different messages, to implement decoupling and make information transmission more flexible.

In a possible design solution, an RLC PDU in the M RLC PDUs includes first indication information, and the first indication information indicates that segmentation of an RLC SDU is based on a segment data size and/or a segment quantity. The first indication information is added to the RLC PDU, so that different segmentation manners can be used for different RLC SDUs. The different segmentation manners used for the different RLC SDUs are indicated to the second communication apparatus by using the first indication information, so that transmission can be more flexible.

Optionally, the RLC PDU in the M RLC PDUs includes second indication information, and the second indication information indicates that the segment data size is the preset data size and/or the segment quantity is the preset segment quantity, so as to dynamically configure the preset data size and/or the preset segment quantity of the segment, thereby implementing segmentation more flexibly.

In a possible design solution, an i^{th} RLC PDU in the M RLC PDUs carries a sequence number of the i^{th} RLC PDU, and i is any integer from 1 to M, to indicate that the i^{th} RLC PDU is the i^{th} of the M RLC PDUs, or that the i^{th} RLC PDU is an i^{th} segment in an RLC SDU #i.

In a possible design solution, the method according to the first aspect may further include: The first communication apparatus receives a status report from the second communication apparatus, where the status report indicates that packet loss occurs in at least one RLC SDU. In this way, the first communication apparatus retransmits the at least one RLC SDU to the second communication apparatus, to minimize packet loss through retransmission, and improve transmission reliability. Optionally, the status report specifically indicates a difference between a sequence number of each of the at least one RLC SDU and a sequence number of an acknowledged RLC SDU. Compared with that the status report indicates the sequence number of the RLC SDU, that the status report indicates the difference requires a smaller quantity of bits, so that overheads of the status report can be reduced.

Optionally, the status report further indicates an unsuccessfully received RLC PDU in a first RLC SDU, and the first RLC SDU belongs to the at least one RLC SDU, so that the RLC PDU can be retransmitted, thereby reducing retransmission overheads.

Further, the status report specifically indicates a location (for example SOstart or SOend), in the first RLC SDU, of the first data or the last data in the unsuccessfully received RLC PDU. In this way, compared with a manner in which both SOstart and SOend are indicated in the conventional technology, indicating only SOstart or SOend can reduce overheads of the status report. Alternatively, the status report specifically indicates a sequence number of the unsuccessfully received RLC PDU. In this way, compared with a manner in which both SOstart and SOend are indicated in the conventional technology, indicating the sequence number of the RLC PDU can reduce overheads of the status report. Alternatively, when the unsuccessfully received RLC PDU includes a plurality of consecutive RLC PDUs, the status report specifically indicates a sequence number of an RLC PDU having a smallest sequence number and a sequence number of an RLC PDU having a largest sequence number in the plurality of RLC PDUs, or the status report specifically indicates a sequence number of an RLC PDU having a smallest sequence number in the plurality of RLC PDUs and a quantity of the plurality of RLC PDUs. In this way, compared with a manner in which a sequence number of each unsuccessfully received RLC PDU is indicated, this manner can reduce bits required for indication, thereby reducing overheads of the status report. Optionally, the at least one RLC SDU includes a plurality of consecutive RLC SDUs.

Further, the status report specifically indicates a quantity of the plurality of RLC SDUs and a difference between a sequence number of an RLC SDU in which packet loss occurs and a sequence number of an acknowledged RLC SDU, and the RLC SDU in which packet loss occurs is an RLC SDU having a smallest sequence number or an RLC SDU having a largest sequence number in the plurality of RLC SDUs. In this way, compared with a manner in which a sequence number of each unsuccessfully received RLC SDU is indicated, this manner can reduce bits required for indication, thereby reducing overheads of the status report.

Further, the status report specifically indicates a location, in the RLC SDU having the smallest sequence number, of the first data in the RLC SDU having the smallest sequence number; and a location, in the RLC SDU having the largest sequence number, of the last data in the RLC SDU having the largest sequence number; or the status report specifically indicates a sequence number of the first lost RLC PDU in the RLC SDU having the smallest sequence number and a sequence number of the last lost RLC PDU in the RLC SDU having the largest sequence number. In this way, compared with a manner of indicating SOstart and SOend, indicating the sequence number of the RLC PDU requires fewer bits, so that overheads of the status report can be reduced.

According to a second aspect, a communication method is provided, applied to a second communication apparatus. The method includes: The second communication apparatus receives M radio link control protocol data units RLC PDUs from a first communication apparatus, where the M RLC PDUs are obtained by segmenting one radio link control service data unit RLC SDU based on a preset data size and/or a preset segment quantity, and M is an integer greater than 1; and the second communication apparatus processes the M RLC PDUs based on the preset data size and/or the preset segment quantity.

In a possible design solution, sizes of at least some of the M RLC PDUs are the same.

In a possible design solution, the preset data size is determined based on at least one of the following: a size of the RLC SDU, quality of communication between the first communication apparatus and the second communication apparatus, and a coverage enhancement level CE of the first communication apparatus or the second communication apparatus.

In a possible design solution, the preset segment quantity is determined based on at least one of the following: a size of the RLC SDU, quality of communication between the first communication apparatus and the second communication apparatus, and a CE of the first communication apparatus or the second communication apparatus.

In a possible design solution, the method according to the second aspect may further include: The second communication apparatus receives first configuration information from the first communication apparatus, where the first configuration information indicates that segmentation of an RLC SDU is based on a segment data size and/or a segment quantity.

Optionally, the method according to the second aspect may further include: The second communication apparatus receives second configuration information from the first communication apparatus, where the second configuration information indicates that the segment data size is the preset data size and/or the segment quantity is the preset segment quantity.

In a possible design solution, an RLC PDU in the M RLC PDUs includes first indication information, and the first indication information indicates that segmentation of an RLC SDU is based on a segment data size and/or a segment quantity.

Optionally, the RLC PDU in the M RLC PDUs includes second indication information, and the second indication information indicates that the segment data size is the preset data size and/or the segment quantity is the preset segment quantity.

In a possible design solution, an i^{th} RLC PDU in the M RLC PDUs carries a sequence number of the i^{th} RLC PDU, and i is any integer from 1 to M.

In a possible design solution, the method according to the second aspect may further include: The second communication apparatus determines that packet loss occurs in at least one RLC SDU sent by the first communication apparatus; and the second communication apparatus sends a status report to the first communication apparatus, where the status report indicates that packet loss occurs in the at least one RLC SDU.

Optionally, the status report specifically indicates a difference between a sequence number of each of the at least one RLC SDU and a sequence number of an acknowledged RLC SDU.

Optionally, the status report further indicates an unsuccessfully received RLC PDU in a first RLC SDU, and the first RLC SDU belongs to the at least one RLC SDU.

Optionally, the status report specifically indicates a location of the first data or the last data in the unsuccessfully received RLC PDU in the first RLC SDU; or the status report specifically indicates a sequence number of the unsuccessfully received RLC PDU; or when the unsuccessfully received RLC PDU includes a plurality of consecutive RLC PDUs, the status report specifically indicates a sequence number of an RLC PDU having a smallest sequence number and a sequence number of an RLC PDU having a largest sequence number in the plurality of RLC PDUs, or the status report specifically indicates a sequence number of an RLC PDU having a smallest sequence number in the plurality of RLC PDUs and a quantity of the plurality of RLC PDUs.

Optionally, the at least one RLC SDU includes a plurality of consecutive RLC SDUs.

Optionally, the status report specifically indicates a quantity of the plurality of RLC SDUs and a difference between a sequence number of an RLC SDU in which packet loss occurs and a sequence number of an acknowledged RLC SDU, and the RLC SDU in which packet loss occurs is an RLC SDU having a smallest sequence number or an RLC SDU having a largest sequence number in the plurality of RLC SDUs.

Optionally, the status report specifically indicates a location, in the RLC SDU having the smallest sequence number, of the first data in the RLC SDU having the smallest sequence number; and a location, in the RLC SDU having the largest sequence number, of the last data in the RLC SDU having the largest sequence number; or the status report specifically indicates a sequence number of the first lost RLC PDU in the RLC SDU having the smallest sequence number and a sequence number of the last lost RLC PDU in the RLC SDU having the largest sequence number.

It may be understood that, for technical effects of the method in the second aspect, refer to the related descriptions in the method according to the first aspect. Details are not described herein again.

According to a third aspect, a communication method is provided, applied to a first communication apparatus. The method includes: The first communication apparatus obtains a packet data convergence protocol protocol data unit PDCP PDU; the first communication apparatus determines a radio link control protocol data unit RLC PDU based on the PDCP PDU, where a radio link control service data unit RLC SDU in which the RLC PDU is located shares a sequence number with the PDCP PDU; and the first communication apparatus sends the RLC PDU.

Optionally, that the RLC SDU shares the sequence number with the PDCP PDU means that a sequence number of the PDCP PDU is the same as a sequence number of the RLC SDU.

It can be learned that, because the RLC SDU in which the RLC PDU is located shares the sequence number with the PDCP PDU, the first communication apparatus or a second communication apparatus locally maintains only one sequence number, or maintains the RLC PDU and the PDCP PDU by using a same sequence number. Compared with the conventional technology, reducing one sequence number can still implement interaction between a PDCP entity and an RLC entity, thereby reducing overheads of the first communication apparatus or the second communication apparatus and improving running efficiency.

According to a fourth aspect, a communication apparatus is provided. The communication apparatus includes a module configured to perform the method according to any one of the first aspect to the third aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and the processor may be integrated together, or may be disposed separately. The memory may be configured to store instructions in methods according to any one of the first aspect to the third aspect.

In embodiments of this application, the communication apparatus according to the fourth aspect may be a network device, a chip (system) or another part or component that may be disposed in the network device, or an apparatus including the network device.

It may be understood that, for technical effects of the apparatus in the fourth aspect, refer to related descriptions in the method according to any one of the first aspect to the third aspect. Details are not described again.

According to a fifth aspect, a communication apparatus is provided. The communication apparatus includes a processor. The processor is coupled to a memory. The processor is configured to execute instructions stored in the memory, to cause the communication apparatus to perform the method according to any one of the first aspect to the third aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the network device according to any one of the first aspect to the third aspect, a chip (system) or another part or component that may be disposed in the network device, or an apparatus including the network device.

In addition, for technical effects of the communication apparatus in the fifth aspect, refer to the technical effects of the method according to any one of the first aspect to the third aspect. Details are not described herein again.

According to a sixth aspect, a communication apparatus is provided, including a processor and a memory. The memory is configured to store instructions. When the processor executes the instructions, the communication apparatus is caused to perform the method according to any one of the first aspect to the third aspect.

In a possible design solution, the communication apparatus according to the sixth aspect may further include a transceiver. The transceiver may be a transceiver circuit or an interface circuit. The transceiver may be used by the communication apparatus according to the third aspect to communicate with another communication apparatus.

In this embodiment of this application, the communication apparatus according to the sixth aspect may be the network device according to any one of the first aspect to the third aspect, a chip (system) or another part or component that may be disposed in the network device, or an apparatus including the network device.

In addition, for technical effects of the communication apparatus in the sixth aspect, refer to the technical effects in the method according to any one of the first aspect to the third aspect. Details are not described herein again.

According to a seventh aspect, a chip is provided. The chip includes a controller and an interface circuit. The controller is configured to interact with another apparatus through the interface circuit, to perform the method according to any one of the first aspect and the third aspect.

According to an eighth aspect, a communication system is provided. The communication system includes at least one of the following: a first communication apparatus configured to perform the method according to the first aspect or the third aspect, or a second communication apparatus configured to perform the method according to the second aspect.

According to a ninth aspect, a computer-readable storage medium is provided. The computer-readable storage medium includes a computer program or instructions, and when the computer program or the instructions are run, the method according to any one of the first aspect to the third aspect is performed.

According to a tenth aspect, a computer program product is provided, including a computer program or instructions. When the computer program or the instructions are run, the method according to any one of the first aspect to the third aspect is performed.

### BRIEF DESCRIPTION OF DRAWINGS

FIG. 1 is a diagram of a user plane protocol stack of NR;
FIG. 2 is a diagram of an RLC working mode;
FIG. 3 is a diagram 1 of an architecture of a communication system;
FIG. 4 is a diagram 2 of an architecture of a communication system;
FIG. 5 is a schematic flowchart 1 of a communication method according to an embodiment of this application;
FIG. 6 is a schematic flowchart 2 of a communication method according to an embodiment of this application;
FIG. 7 is a schematic flowchart 3 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

The technical solutions in embodiments of this application may be applied to various communication systems, for example, a wireless fidelity (Wi-Fi) system, a vehicle-to-everything (vehicle-to-everything, V2X) communication system, a sidelink (sidelink) communication system, a 4th generation (4th generation, 4G) mobile communication system, such as a long term evolution (long term evolution, LTE) system, a 5th generation (5th generation, 5G) mobile communication system, such as a new radio (new radio, NR) system, and a future communication system, such as a 5.5G or 6th generation (6th generation, 6G) mobile communication system.

For ease of understanding, the following first describes technical terms in embodiments of this application.

### 1. Radio access network protocol stack

A network device and a terminal device have a specific protocol stack structure, to communicate with each other. For example, a user plane protocol stack structure may include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, a physical layer, and the like. The physical layer is located at the lowest layer (layer 1), the MAC layer, the RLC layer, the PDCP layer, and the SDAP layer belong to a second layer (layer 2), and the RRC layer belongs to a third layer (layer 3).

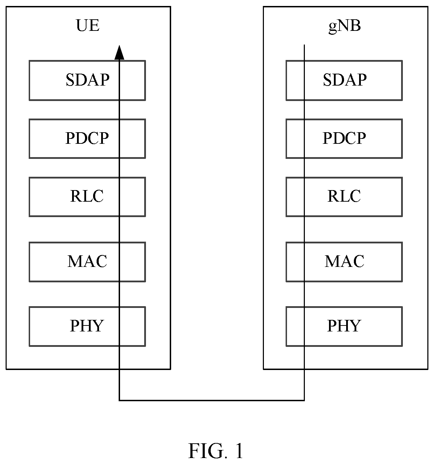

As shown in FIG. 1, for a user plane protocol stack of NR, an SDAP layer and a PDCP layer are located above a MAC layer and an RLC layer, and downlink data transmission is performed in a direction shown by an arrow. Downlink data first arrives at an SDAP layer of a gNB. After being mapped by the SDAP layer, the downlink data is transmitted to a corresponding PDCP entity. After being processed by a PDCP layer of the gNB, the downlink data is transmitted to an RLC layer and a MAC layer. After being processed correspondingly, the downlink data is sent from a physical layer and transmitted to a user equipment (user equipment, UE) side through an air interface. Then, protocol layers of the UE may sequentially perform corresponding processing on the data packet in a processing sequence reverse to that of the gNB. In the gNB and the UE, processing of the data packet by each layer may be visually combined into a radio bearer. Each piece of data in the radio bearer needs to be processed by each layer, and each layer has a corresponding functional entity to perform a corresponding function, for example, a PDCP entity of a PDCP layer. Each radio bearer configuration includes one PDCP entity, and the radio bearer configuration is associated with one RLC entity and corresponds to one logical channel.

It may be understood that the protocol stack architecture described above is not limited, but is an example for ease of understanding of the technical solutions in embodiments of this application.

The technical solutions in embodiments of this application may be applicable to any possible protocol stack architecture in the future.

### 2. RLC

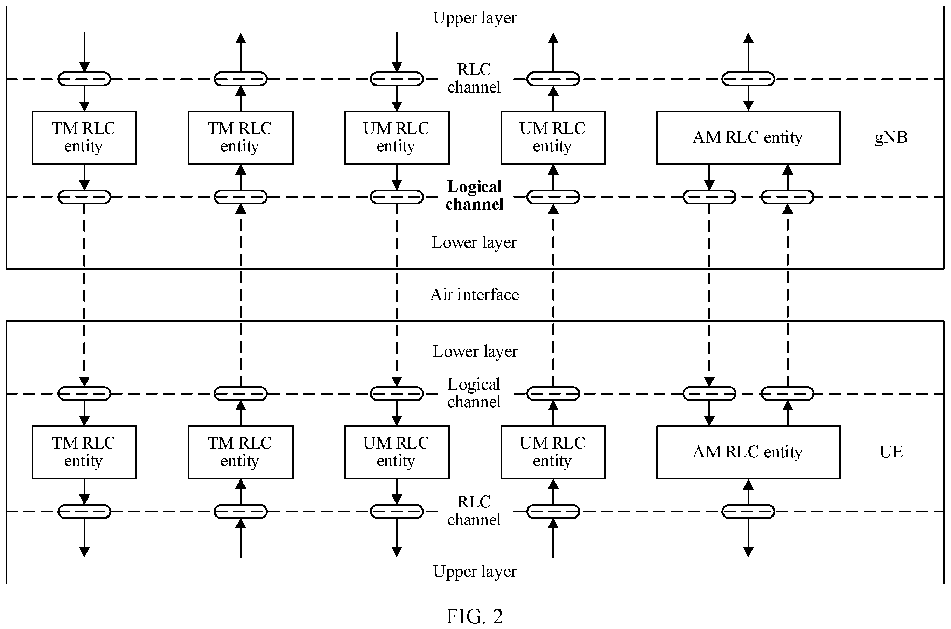

As shown in FIG. 2, an RLC working mode includes the following:
Transparent mode (transparent mode, TM): The TM corresponds to a TM RLC entity, referred to as a TM entity for short. This mode may be considered as RLC not performing any processing, because RLC only provides a pass-through (pass through) function for data in this mode.

Unacknowledged mode (unacknowledged mode, UM): The UM corresponds to a UM RLC entity, referred to as a UM entity for short. This mode provides all RLC functions except for retransmission and re-segmentation. Because no retransmission function is available even if an error occurs in data packet transmission, this mode provides a relatively unreliable transmission service.

Acknowledged mode (acknowledged mode, AM): The AM corresponds to an AM RLC entity, referred to as an AM entity for short. In this mode, error detection and retransmission can be performed. The AM mode provides a relatively reliable transmission service. This mode provides all RLC functions, including an automatic repeat request (automatic repeat request, ARQ) function described below.

RLC SDUs of variable sizes which are byte aligned (that is, multiple of 8 bits) are supported for all RLC entity types (that is, TM, UM and AM RLC entity). Each RLC SDU is used to construct an RLC PDU, and in a process of constructing the RLC PDU, there is no need to wait for notification of a transmission opportunity from the lower layer (that is, a MAC layer). For the UM and AM RLC entities, one RLC SDU may be segmented into two or more RLC PDUs for transmission based on the transmission opportunity notified by the lower layer. The RLC PDU is submitted to the lower layer only when the transmission opportunity is notified by the lower layer (that is, by MAC).

In wireless communication, when a service needs to be transmitted, a gNB configures a radio bearer for a UE for service transmission. A configuration of the radio bearer includes RLC configuration information. Based on a quality of service (quality of service, QoS) requirement of the service, RLC may be configured as any one of the foregoing RLC working modes. When RLC is configured as the UM RLC entity, if an RLC SDU does not need to be segmented, a sequence number (SN) does not need to be added to a header of an RLC PDU including the complete RLC SDU. If an RLC SDU needs to be segmented, an SN needs to be added to a header of an RLC PDU including RLC SDU segments. This is because for an RLC PDU including a complete RLC SDU, after receiving the RLC PDU, an RLC layer of a receiving end may directly submit the RLC PDU to an upper layer without reading the SN. However, for an RLC PDU including RLC SDU segments, the receiving end needs to determine, based on the SN in the header, specific RLC SDU segments that belong to a same complete RLC SDU, and then assemble the RLC SDU segments together to recover a complete RLC SDU before submission.

RLC PDUs may be classified into an RLC data PDU and an RLC control PDU. The RLC data PDU is used by the TM RLC entity, the UM RLC entity, and the AM RLC entity to transfer an upper layer PDU (that is, an RLC SDU). The RLC control PDU is used by the AM RLC entity to perform an ARQ procedure. The RLC data PDU includes a TMD PDU, a UMD PDU, and an AMD PDU, and the RLC control PDU includes a STATUS PDU. The TMD PDU is used by the TM RLC entity to transfer an upper layer PDU. The UMD PDU is used by the UM RLC entity to transfer an upper layer PDU. The AMD PDU is used by the AM RLC entity to transfer an upper layer PDU. The STATUS PDU is used by a receiving side of the AM RLC entity to notify its peer AM RLC entity of an RLC data PDU that is received successfully, and an RLC data PDU that is detected to be lost by the receiving side of the AM RLC entity.

The RLC SDU is a bit string that is byte aligned (that is, a multiple of 8 bits) in length. The RLC SDU is included in the RLC PDU from the first bit. The RLC PDU is a bit string (bit string), and the bit string is represented by a table, where the most significant bit is the leftmost bit of the first line of the table, and the least significant bit is the rightmost bit of the last line of the table. More generally, the bit string is read from left to right in the order of the lines, which is described below. The TMD PDU consists of a data field and does not consist of an RLC header. For example, a frame structure of the TMD PDU may be shown in Table 1.

**Table 1**

| | |
|---|---|
| Data | Oct1 |
| ... | ... |
| ... | OctN |

The UMD PDU consists of a data field and a UMD PDU header. The UMD PDU header is byte aligned.

When the UMD PDU contains a complete RLC SDU, the UMD PDU header contains SI and R fields. For example, a frame structure of the UMD PDU carrying the complete RLC SDU may be shown in Table 2.

**Table 2**

| | | | | | | | |
|---|---|---|---|---|---|---|---|
| SI | R | R | R | R | R | R | Oct1 |
| Data | | | | | | | Oct2 |
| ... | | | | | | | ... |
| ... | | | | | | | OctN |

The UM RLC entity is configured by RRC to use a 6-bit SN or a 12-bit SN. When the corresponding RLC SDU is segmented, the UMD PDU header contains an SN field. A UMD PDU carrying the first segment of the RLC SDU does not carry an SO field in its header. A length of the SO field is 16 bits. A frame structure of a UMD PDU carrying a 6-bit SN (carrying no SO) may be shown in Table 3, a frame structure of a UMD PDU carrying a 12-bit SN (carrying no SO) may be shown in Table 4, a frame structure of a UMD PDU carrying a 6-bit SN and an SO may be shown in Table 5, and a frame structure of a UMD PDU carrying a 12-bit SN and an SO may be shown in Table 6.

**Table 3**

| | | |
|---|---|---|
| SI | SN | Oct1 |
| Data | | Oct2 |
| ... | | ... |
| ... | | OctN |

**Table 4**

| | | | | |
|---|---|---|---|---|
| SI | R | R | SN | Oct1 |
| SN | | | | Oct2 |
| Data | | | | Oct3 |
| ... | | | | ... |
| ... | | | | OctN |

**Table 5**

| | | |
|---|---|---|
| SI | SN | Oct1 |
| SO | | Oct2 |
| SO | | Oct3 |
| Data | | Oct4 |
| ... | | ... |
| ... | | OctN |

**Table 6**

| | | | | |
|---|---|---|---|---|
| SI | R | R | SN | Oct1 |
| SN | | | | Oct2 |
| SO | | | | Oct3 |
| SO | | | | Oct4 |
| Data | | | | Oct5 |
| ... | | | | ... |
| ... | | | | OctN |

The AMD PDU consists of a data field and an AMD PDU header. The AMD PDU header is byte aligned.

The AM RLC entity is configured by RRC to use a 12-bit SN or an 18-bit SN. A length of the AMD PDU header is two and three bytes respectively. The AMD PDU header contains D/C, P, SI, and SN. The AMD PDU header contains an SO field only when the data field consists of an RLC SDU segment that is not the first segment, in which case a 16-bit SO is present. A frame structure of an AMD PDU carrying a 12-bit SN (carrying no SO) may be shown in Table 7, a frame structure of an AMD PDU carrying an 18-bit SN (carrying no SO) may be shown in Table 8, a frame structure of an AMD PDU carrying a 12-bit SN and an SO may be shown in Table 9, and a frame structure of an AMD PDU carrying an 18-bit SN and an SO may be shown in Table 10.

**Table 7**

| | | | | |
|---|---|---|---|---|
| D/C | P | SI | SN | Oct1 |
| SN | | | | Oct2 |
| Data | | | | Oct3 |
| ... | | | | ... |
| ... | | | | OctN |

**Table 8**

| | | | | | | |
|---|---|---|---|---|---|---|
| D/C | P | SI | R | R | SN | Oct1 |
| SN | | | | | | Oct2 |
| SN | | | | | | Oct3 |
| Data | | | | | | Oct4 |
| ... | | | | | | ... |
| ... | | | | | | OctN |

**Table 9**

| | | | | |
|---|---|---|---|---|
| D/C | P | SI | SN | Oct1 |
| SN | | | | Oct2 |
| SO | | | | Oct3 |
| SO | | | | Oct4 |
| Data | | | | Oct5 |
| ... | | | | ... |
| ... | | | | OctN |

**Table 10**

| | | | | | | |
|---|---|---|---|---|---|---|
| D/C | P | SI | R | R | SN | Oct1 |
| SN | | | | | | Oct2 |
| SN | | | | | | Oct3 |
| SO | | | | | | Oct4 |
| SO | | | | | | Oct5 |
| Data | | | | | | Oct6 |
| ... | | | | | | ... |
| ... | | | | | | OctN |

In Table 1 to Table 10, data field elements are mapped to the data field (data field) in the order in which they arrive at the RLC entity at the transmitter. For the TMD PDU, the UMD PDU, and the AMD PDU, a granularity of a data field size is one byte, and a maximum data field size is a maximum size of a PDCP PDU. For the UMD PDU and the AMD PDU, only one RLC SDU can be generally mapped to a data field of one TMD PDU.

The R field is a reserved field, indicating a reserved field for this release of the protocol, or a reserved field. A transmitting entity shall set the R field to "0". A receiving entity shall ignore this field.

The SN in the UMD PDU/AMD PDU indicates an SN of the corresponding RLC SDU. For the RLC AM entity, an SN of each RLC SDU is incremented by 1 compared with an SN of a previous RLC SDU. For the RLC UM entity, an SN of each RLC SDU is incremented by 1 compared with an SN of a previous RLC SDU, and SNs of different segments of a same RLC SDU are the same. The SN in the AMD PDU is 12 bits or 18 bits (configurable). The SN in the UMD PDU is 6 bits or 12 bits (configurable).

The SI field is a segmentation information field. The SI field may be two bits, and four value combinations of the SI field respectively indicate that the RLC PDU includes a complete RLC SDU (indicated by 00), that the RLC PDU is the first RLC SDU segment (indicated by 01), that the RLC PDU is a middle RLC SDU segment (indicated by 10), and that the RLC PDU is the last RLC SDU segment (indicated by 11).

The SO field is a segment offset field, and indicates a position of an RLC SDU segment in an original RLC SDU. The position may be in bytes. Specifically, the SO field indicates a position of the first data byte in the RLC SDU segment in the original RLC SDU. The first data byte of the original RLC SDU is referred by an SO value "0000000000000000", that is, numbering starts at zero.

The D/C field is a data/control field, which is a 1-bit information element. Two values 0 and 1 of the D/C field respectively indicate whether the RLC PDU is an RLC data PDU or an RLC control PDU.

The P field is a polling bit field, which is a 1-bit information element. Two values 0 and 1 of the P field respectively indicate whether a transmitting side of the AM RLC entity requests a STATUS report from its peer AM RLC entity.

The STATUS PDU includes a STATUS PDU payload and an RLC control PDU header. The RLC control PDU header includes D/C and CPT fields. The STATUS PDU payload starts from the first bit following the RLC control PDU header, and it consists of one ACK_SN and one E1, zero or more sets of NACK_SN/E1/E2/E3, and possibly a pair of SOstart/SOend or a NACK range field corresponding to each NACK_SN. A frame structure of a STATUS PDU carrying a 12-bit SN may be shown in Table 11, and a frame structure of a STATUS PDU carrying an 18-bit SN may be shown in Table 12.

**Table 11**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| NACK_SN | | E1 | E2 | E3 | R | R | R | Oct5 |
| NACK_SN | | | | | | | | Oct6 |
| NACK_SN | | E1 | E2 | E3 | R | R | R | Oct7 |
| SOstart | | | | | | | | Oct8 |
| SOstart | | | | | | | | Oct9 |
| SOend | | | | | | | | Oct10 |
| SOend | | | | | | | Oct11 | |
| NACK_range | | | | | | | Oct12 | |
| NACK_SN | | | | | | | Oct13 | |
| NACK_SN | E1 | E2 | E3 | R | R | R | Oct14 | |
| ... | | | | | | | ... | |

**Table 12**

| | | | | | | | | |
|---|---|---|---|---|---|---|---|---|
| D/C | CPT | | | AC K_SN | | | | Oct1 |
| ACK_SN | | | | | | | | Oct2 |
| ACK_SN | | | | | | E1 | R | Oct3 |
| NACK_SN | | | | | | | | Oct4 |
| NACK_SN | | | | | | | | Oct5 |
| NACK K_SN | | E1 | E2 | E3 | R | R | R | Oct6 |
| NACK_SN | | | | | | | | Oct7 |
| NACK_SN | | | | | | | | Oct8 |
| NACK K_SN | | E1 | E2 | E3 | R | R | R | Oct9 |
| SOstart | | | | | | | | Oct10 |
| SOstart | | | | | | | | Oct11 |
| SOend | | | | | | | | Oct12 |
| SOend | | | | | | | | Oct13 |
| NACK_range | | | | | | | | Oct14 |
| NACK_SN | | | | | | | | Oct15 |
| NACK_SN | | | | | | | | Oct16 |
| NACK _SN | | E1 | E2 | E3 | R | R | R | Oct17 |
| ... | | | | | | | | ... |

In Table 11 and Table 12, the CPT field is a control PDU type field, which is a 3-bit information element. For example, 000 indicates that a type of the RLC control PDU is a STATUS PDU, and 001 indicates that a type of the RLC control PDU is another type.

ACK_SN is an acknowledgment SN field, and its length is 12 bits or 18 bits (configurable). ACK_SN indicates an SN of a next unreceived RLC SDU that is not reported as missing in the STATUS PDU. For example, SNs of the RLC SDUs include 0 to 5, and the ACK_SN field indicates that the SN is 5, indicating that all RLC SDUs whose SNs are 0 to 4 are successfully received. When the transmitting side of the AM RLC entity receives a STATUS PDU, it indicates that all RLC SDUs up to but not including the RLC SDU with SN = ACK_SN have been received by its peer AM RLC entity, excluding RLC SDUs indicated in the STATUS PDU with NACK_SN, portions of RLC SDUs indicated in the STATUS PDU with NACK_SN, SOstart and SOend, RLC SDUs indicated in the STATUS PDU with NACK_SN and NACK_range, and portions of RLC SDUs indicated in the STATUS PDU with NACK_SN, NACK_range, SOstart and Soend.

The E1 field is an extension bit 1 field, which is a 1-bit information element. A value 1 of the bit indicates that a set of NACK_SN, E1, E2, and E3 follows, and a value 0 of the bit indicates that a set of NACK_SN, E1, E2, and E3 does not follow.

NACK_SN is a negative acknowledgment SN field, and its length is 12 bits or 18 bits (configurable). NACK_SN indicates an SN of an RLC SDU (or RLC SDU segment) that has been detected as lost at the receiving side of the AM RLC entity.

The E2 field is an extension bit 2 field, which is a 1-bit information element. A value 1 of the bit indicates that a set of SOstart and SOend follows, and a value 0 of the bit indicates that a set of SOstart and Soend does not follow.

SOstart is an SO start field, and its length is 16 bits. SOstart (together with SOend) indicates a portion of the RLC SDU with SN = NACK_SN (NACK_SN for which SOstart is related to) that has been detected as lost at the receiving side of the AM RLC entity. Specifically, the SOstart field indicates a position of the first byte of the lost portion of the RLC SDU in the original RLC SDU. The first byte of the original RLC SDU is referred by an SOstart value "0000000000000000", that is, numbering starts at zero.

SOend is an SO end field, and its length is 16 bits. When E3 is 0, SOend (together with SOstart) indicates a portion of the RLC SDU with SN = NACK_SN (NACK_SN for which SOend is related to) that has been detected as lost at the receiving side of the AM RLC entity. Specifically, the SOend field indicates a position of the last byte of the lost portion of the RLC SDU in the original RLC SDU. The first byte of the original RLC SDU is referred by an SOend value "0000000000000000", that is, numbering starts at zero. A special SOend value "1111111111111111" indicates that the lost portion of the RLC SDU includes all bytes to the last byte of the RLC SDU.

The E3 field is an extension bit 3 field, which is a 1-bit information element. A value 1 of the bit indicates that information about a continuous sequence of RLC PDUs that have not been received (that is, NACK_rang) follows for NACK_SN, and a value 0 of the bit indicates that information about a continuous sequence of RLC PDUs that have not been received does not follow for NACK_SN.

NACK_range is a negative acknowledgment range field, and its length is 8 bits. The NACK_range field indicates the number of consecutively lost RLC SDUs starting from NACK_SN (including NACK_SN).

### 3. Passive radio frequency identification (radio frequency identification, RFID)

An RFID system includes a reader and a tag device. The reader reads information from the tag device, or writes information that needs to be stored in the tag device into the tag device. Noncontact data communication is performed between the reader and the tag device. The tag device has a simple function, and relies on excitation of the reader to send information. To be specific, the tag device converts a wireless signal emitted by the reader into energy, and uses the energy to drive the tag device to operate. The tag supports power consumption on the order of microwatts or hundreds of microwatts, but does not support complex design.

If RFID is applied to a mobile communication system, for example, applied to a 5G system, a base station may serve as a reader to implement a function of the reader. Currently, an RFID technology is used to identify a target. An RFID system usually includes a reader (Interrogator) and an electronic tag (Tag). The reader may exchange information with the electronic tag, to manage the electronic tag.

### 4. Ambient internet of things (Ambient IoT, A-IoT)

In view of the advantages of the RFID communication technology in low power consumption, the ambient internet of things emerges. To meet an ultra-low power consumption requirement, a terminal device in the ambient internet of things also uses a low-precision medium-to-low frequency ring oscillator with low power consumption to receive a downlink signal or receives a downlink signal without a local oscillator. In this receiving manner, downlink receiving power consumption of the terminal device can be further reduced. However, for this low-power consumption receiving manner, only amplitude detection such as envelope detection can be performed, because only a low-precision ring oscillator cannot ensure accurate demodulation of signal phase information.

An internet of things technology with extremely low power consumption and extremely low complexity defined by the 3rd generation partnership project (3rd generation partnership project, 3GPP) may be understood as an extension of RFID in 3GPP. Although 3GPP shares some similar principles with RFID, for example, a similar inventory service procedure, 3GPP introduces more value scenarios. A-IoT is based on cellular network communication infrastructure, consisting of a reader (such as a base station) and a passive/semi-passive/active tag (the tag is a terminal in a cellular network, which is understood as an internet of things terminal with extremely low power consumption and extremely low complexity). Main services include inventory, positioning, sensing, and command. Typical application scenarios include logistics, warehousing, industrial manufacturing, identification, and environment monitoring. For example, the inventory service uses a reader (which may be a base station/terminal) to access a tag (A-IoT terminal device) in a coverage area. A device that successfully accesses the tag needs to send a unique identifier (which can be identified by a network, for example, an EPC in RFID) of the device to the reader. Positioning is to use some positioning signals to locate a tag. Sensing is that the tag reports sensing data to the base station, such as temperature data.

It can be learned that, for a new service scenario, for example, an ambient internet of things, a data rate provided by the new service scenario is small, a data amount transmitted at a time is limited, and transmission complexity is required to be as low as possible. However, it can be learned from the foregoing related description of "2. RLC" that segmentation performed by RLC on a data packet (for example, an RLC SDU) is flexible, a data amount is large, and processing complexity is high. Therefore, for a new service scenario, how to simplify an RLC segmentation mechanism is a hot topic in current research.

For the foregoing technical problems, embodiments of this application provide the following technical solutions.

The following describes the technical solutions of this application with reference to accompanying drawings.

In embodiments of this application, "indication" may include a direct indication and an indirect indication, or may include an explicit indication and an implicit indication. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periods and/or sending occasions of the sub-information may be the same or may be different. A specific sending method is not limited in embodiments of this application. The sending periods and/or the sending occasions of the sub-information may be predefined, for example, predefined according to a protocol, or may be configured by a transmit end device by sending configuration information to a receive end device.

In this application, "sending information" may be understood as that a device sends information to another device, or may be understood as that a logical module in the device sends information to another logical module. For example, "a network device sends information" may be understood as that the network device sends information to another device (for example, a terminal or another network device), or may be understood as that a logical module 1 in the network device sends information to a logical module 2 in the network device.

In this application, "receiving information" may be understood as that a device receives information from another device, or may be understood as that a logical module in the device receives information from another logical module. For example, "a network device receives information" may be understood as that the network device receives information from another device (for example, a terminal or another network device), or may be understood as that a logical module 1 in the network device receives information from a logical module 2 in the network device. In this application, "sending information to ... (for example, a terminal)" or a related illustration in the accompanying drawings may be understood as that a destination of the information is the terminal, and may include directly or indirectly sending the information to the terminal. "Receiving information from ... (for example, a terminal)" or "receiving information that is from ... (for example, a terminal)" or "receiving information sent by (for example, a terminal)" or a related illustration in the accompanying drawings may be understood as that a source of the information is the terminal, and may include directly or indirectly receiving information from the terminal. Information may undergo necessary processing, for example, a format change, between the source end for sending the information and the destination end. However, the destination end may understand valid information from the source end. Similar descriptions in this application may be understood similarly. Details are not described herein again.

"Predefinition" or "preconfiguration" may be implemented by prestoring corresponding code or a corresponding table in a device, or may be implemented in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this embodiment of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In the descriptions of embodiments of this application, unless otherwise specified, the character "/" indicates that associated objects are in an "or" relationship. For example, A/B may represent A or B. The term "and/or" in embodiments of this application merely describes an association relationship between associated objects and indicates that three relationships may exist. For example, A and/or B may represent three cases: Only A exists, both A and B exist, or only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system is first used as an example to describe in detail a communication system applicable to embodiments of this application.

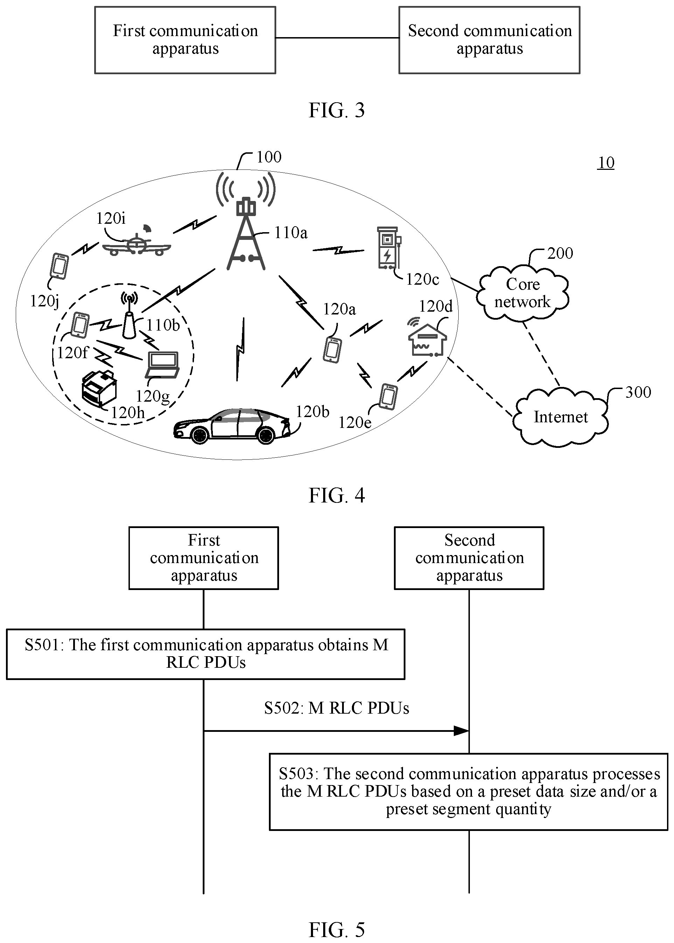

FIG. 3 is a diagram of an architecture of a communication system. The communication system mainly includes a first communication apparatus and a second communication apparatus. The first communication apparatus may be a terminal or a network device. Similarly, the second communication apparatus may also be a terminal or a network device.

For example, the first communication apparatus is a network device, and the second communication apparatus is a terminal. A non-limiting architecture of the communication system may be shown in FIG. 4. As shown in FIG. 4, the communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 4, which are collectively referred to as 120). The RAN 100 may further include another RAN node, for example, a wireless relay device and/or a wireless backhaul device (not shown in FIG. 4). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be one or more physical devices (or referred to as network devices) that integrate a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and is a component of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 4 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 4 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 4), a micro base station or an indoor base station (for example, 110b in FIG. 4), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some of functions of the RAN node in this application may alternatively be implemented by using a software function running on hardware or by using a virtualization function instantiated on a platform (for example, a cloud platform). A communication module, a circuit, or a chip that performs a corresponding communication function may be further disposed in the RAN node. A program instruction used to perform a corresponding communication function may be further configured in the RAN node. The RAN node in this application may alternatively be a logical node, a logical module, or software that can implement all or some of functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). Alternatively, the RAN node is a network device having a logical function of the core network device.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal (terminal) may be a device or a module that accesses the foregoing communication system and has a corresponding communication function. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, smart grid, smart home, smart office, smart wearable, smart transportation, and smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, a transport vehicle with a wireless communication function, a communication module, or the like. A device form of the terminal is not limited in embodiments of this application. A communication module, a circuit, or a chip that performs a corresponding communication function is usually disposed in the terminal. A program instruction used to execute a corresponding communication function may be further configured in the terminal. In the communication system, the first communication apparatus may segment one RLC SDU into the M RLC PDUs in a non-flexible or fixed manner, for example, based on a preset data size and/or a preset segment quantity, and send the M RLC PDUs to the second communication apparatus, where M is an integer greater than 1. Correspondingly, the second communication apparatus receives the M RLC PDUs from the first communication apparatus, and the second communication apparatus may also assemble the M RLC PDUs in a fixed manner, to obtain the one RLC SDU. This simplifies RLC segmentation and reduces processing complexity, thereby meeting a communication requirement in a future new service scenario, such as an RFID system or an ambient internet of things scenario.

The following further describes the communication method and apparatus in embodiments of this application with reference to the accompanying drawings. It may be understood that, in this application, an example in which a network device and a terminal are used as execution bodies of the interaction is used for description. However, the execution bodies of the interaction are not limited in this application. For example, a method performed by the network device in this application may alternatively be performed by a module (for example, a chip, a chip system, or a processor) used in the network device, or may be implemented by a logical node, a logical module, or software that can implement all or some functions of the network device. A method performed by the terminal in this application may alternatively be performed by a module (for example, a chip, a chip system, or a processor) used in the terminal, or may be implemented by a logical node, a logical module, or software that can implement all or some functions of the terminal.

The following specifically describes an interaction procedure between network elements/devices in the foregoing communication system by using method embodiments. The communication method provided in embodiments of this application is applicable to the foregoing communication system, and is specifically applied to various scenarios mentioned in the foregoing communication system. The following provides detailed descriptions.

FIG. 5 is a schematic flowchart 1 of a communication method according to an embodiment of this application. The communication method is applicable to the foregoing communication system, and mainly relates to interaction between a first communication apparatus and a second communication apparatus.

Specifically, as shown in FIG. 5, a procedure of the communication method is as follows.

S501: The first communication apparatus obtains M RLC PDUs.

M is an integer greater than 1, and the M RLC PDUs may be obtained by segmenting one RLC SDU based on a preset data size and/or a preset segment quantity. That the first communication apparatus obtains the M RLC PDUs may be understood as that an RLC entity of the first communication apparatus obtains the M RLC PDUs by segmenting the RLC SDU, or the RLC SDU segment is segmented in advance to obtain the M RLC PDUs. The M RLC PDUs may be stored in a storage area. When a transmission occasion arrives or is to arrive, the RLC entity of the first communication apparatus obtains the M RLC PDUs from the storage area. Certainly, the first communication apparatus may obtain the M RLC PDUs in any other possible implementation. This is not specifically limited in this embodiment of this application.

S502: The first communication apparatus sends the M RLC PDUs to the second communication apparatus. The second communication apparatus receives the M RLC PDUs from the first communication apparatus.

S503: The second communication apparatus processes the M RLC PDUs based on the preset data size and/or the preset segment quantity.

In conclusion, the first communication apparatus may segment the one RLC SDU into the M RLC PDUs in a non-flexible or fixed manner, for example, based on the preset data size and/or the preset segment quantity, and send the M RLC PDUs to the second communication apparatus. Correspondingly, the second communication apparatus receives the M RLC PDUs from the first communication apparatus, and the second communication apparatus may also assemble the M RLC PDUs in a fixed manner, to obtain the one RLC SDU. This simplifies RLC segmentation and reduces processing complexity, thereby meeting communication requirements in future new service scenarios, such as RFID systems or A-IoT scenarios.

The following specifically describes S501 to S503.

S501:
The M RLC PDUs may be M UMD PDUs or M AMD PDUs, and may be specifically obtained by segmenting the one RLC SDU based on the preset data size and/or the preset segment quantity, so that sizes of at least some of the M RLC PDUs are the same. For example, sizes of N RLC PDUs are the same, where N is an integer greater than or equal to 2 and less than or equal to M. If sizes of some RLC PDUs are the same, it may also be understood that sizes of a maximum of M-1 RLC PDUs are the same. That the sizes of the RLC PDUs are the same may be that data amounts or data lengths of the RLC PDUs are the same, for example, 100 bytes. Specifically, payload parts of the RLC PDUs may be the same (whether sizes of headers of the RLC PDUs are the same is not limited), or overall sizes of the RLC PDUs may be the same, that is, sizes of payloads and headers are the same. This may be specifically selected flexibly based on an actual situation. This is not limited herein.

One RLC SDU may be denoted as an RLC SDU #i, and i ranges from 1 to an integer greater than 1. In other words, there may be a plurality of RLC SDUs, and the RLC SDU #i is an i^{th} RLC SDU in the plurality of RLC SDUs. The plurality of RLC SDUs may belong to a same data radio bearer (data radio bearer, DRB), that is, one or more QoS flows to which the DRB is mapped. One RLC SDU is segmented based on a granularity of an associated DRB. In other words, an RLC SDU of a same DRB may be segmented in the manner in this embodiment of this application, that is, based on the preset data size and/or the preset segment quantity, and RLC SDUs of different DRBs may be segmented in different manners. For example, an RLC SDU of a DRB #1 is segmented in the manner in this embodiment of this application, and an RLC SDU of a DRB #2 is flexibly segmented in a manner in the conventional technology. Alternatively, different QoS flows mapped to a same DRB may be segmented in different manners. Alternatively, a plurality of RLC SDUs may belong to a plurality of DRBs, and these DRBs may correspond to a same service or a plurality of services. In other words, RLC SDUs of a same service may be segmented in a same manner or different manners, and RLC SDUs of different services may be segmented in a same manner or different manners. For example, an RLC SDU of a service #1 is segmented in the manner in this embodiment of this application, and an RLC SDU of a service #2 is flexibly segmented in a manner in the conventional technology. It may be understood that the foregoing different services may be different sessions, for example, PDU sessions or any other future sessions that may be named, or may be different flows, for example, QoS flows, data flows, or service flows, or may be different services, for example, videos or audio. The foregoing are some examples of the services. Specific implementation of the services is not limited in this embodiment of this application.

For ease of understanding, the following uses an example in which the RLC SDU #i is segmented for specific description.

### Manner 1: Perform segmentation based on the preset data size:

The preset data size may indicate that a data length or a data size of a segment needs to be a preset value. The preset data size may be in bytes, for example, the preset value is 100 bytes, or may be in bits, for example, the preset value is 100 bits. The preset data size may be a data size predefined in a protocol. For example, the protocol defines a specific data size based on which the RLC SDU needs to be segmented. Alternatively, the preset data size may be dynamically determined and configured by the first communication apparatus and/or the second communication apparatus, for example, determined and configured based on at least one of the following: a size of the RLC SDU #i, quality of communication between the first communication apparatus and the second communication apparatus, and a coverage enhancement level (coverage enhancement level, CE Level) of the first communication apparatus or the second communication apparatus, CE for short. The following provides separate descriptions.
(1) The size of the RLC SDU #i may be positively correlated with the preset data size, so that a segment quantity is fixed as the size of the RLC SDU changes, thereby avoiding excessively high transmission complexity caused by an excessively large segment quantity. For example, the first communication apparatus and/or the second communication apparatus may configure correspondences between different RLC SDU size intervals and different preset data sizes. For example, an RLC SDU (0,400) corresponds to a preset data size 50, an RLC SDU [400, 1000) corresponds to a preset data size 100, an RLC SDU [1000, 1600) corresponds to a preset data size 150, and so on. Details are not described again.

It should be understood that the positive correlation between the size of the RLC SDU #i and the preset data size is merely an example. For example, the size of the RLC SDU #i may alternatively be negatively correlated with the preset data size.

The first communication apparatus and/or the second communication apparatus may determine, according to a rule predefined in a protocol, for example, a correspondence between an RLC SDU size interval and different preset data sizes, an RLC SDU size interval corresponding to the RLC SDU #i, and determine a preset data size corresponding to the RLC SDU size interval. The rule may be rules of different granularities. For example, by using a UE as a granularity, rules predefined in protocols of different UEs may be different, that is, correspondences between RLC SDU size intervals predefined in protocols of different UEs and different preset data sizes may be different. For example, an RLC SDU (0, 400) configured for a UE 1 corresponds to a preset data size 50, and an RLC SDU (0, 400) configured for a UE 2 corresponds to a preset data size 80. In addition, the predefined rule may be carried in an RRC message, for example, a UE configuration in an RRC reconfiguration message, to implement a UE granularity configuration. For another example, by using a session as a granularity, rules corresponding to different sessions may be different. The predefined rule may be carried in an RRC message, for example, a PDU session configuration in an RRC reconfiguration message, to implement a session granularity configuration. For still another example, by using a DRB as a granularity, different DRBs may correspond to different rules, for example, a DRB configuration in an RRC reconfiguration message, to implement a DRB granularity configuration.

(2) The quality of communication between the first communication apparatus and the second communication apparatus may be positively correlated with the preset data size. For example, better quality of communication between the first communication apparatus and the second communication apparatus means that communication complexity may be higher, and the preset data size may also be larger. The communication quality may be reference signal strength, for example, reference signal received power (reference signal received power, RSRP), or any other information that may indicate communication quality, for example, a channel state. This is not specifically limited. Using RSRP as an example, the first communication apparatus and/or the second communication apparatus may alternatively configure correspondences between different RSRP intervals and different preset data sizes.

It should be understood that the positive correlation between the communication quality and the preset data size is merely an example. For example, the communication quality may alternatively be negatively correlated with the preset data size.

The first communication apparatus and/or the second communication apparatus may measure RSRP of the first communication apparatus and the second communication apparatus (specific measurement may be implemented by reusing the conventional technology, and details are not described herein), and determine a corresponding preset data size based on an RSRP interval in which the measured RSRP is located.

(3) In NB-IoT, the CE is divided into three levels, ranging from 0 to 2, which correspond to signal attenuation of 144 dB, 154 dB, and 164 dB that can be resisted respectively. In other words, a higher CE level indicates a stronger capability of resisting a signal attenuation, which means that communication complexity may be higher, and the preset data size may also be larger. The first communication apparatus and/or the second communication apparatus may preconfigure correspondences between different CE levels and different preset data sizes. For example, a CE 0 corresponds to a preset data size 50, a CE 1 corresponds to a preset data size 100, and a CE 2 corresponds to a preset data size 200. It may be understood that the preset data size is an example name, and may be replaced with any possible name, for example, a data size, a target data size, a data length, a preset data length, or a target data length.

The first communication apparatus may determine, based on a CE of the first communication apparatus or a CE reported by the second communication apparatus in advance (for example, the CE may be carried in an existing message or a newly defined message), a preset data size corresponding to the CE. Alternatively, the second communication apparatus may determine, based on a CE of the second communication apparatus or a CE reported by the first communication apparatus in advance (for example, the CE may be carried in an existing message or a newly defined message), a preset data size corresponding to the CE.

The first communication apparatus may segment the RLC SDU #i based on the preset data size, to obtain the M RLC PDUs. For example, the RLC SDU #i is transferred by a PDCP entity of the first communication apparatus to the RLC entity of the first communication apparatus. If the RLC entity of the first communication apparatus is a UM RLC entity, the UM RLC entity may segment the RLC SDU #i based on the preset data size, for example, into M segments, and each segment may be used as a payload of a corresponding UMD PDU, to obtain M UMD PDUs. In other words, the M RLC PDUs are the M UMD PDUs. If the RLC entity of the first communication apparatus is an AM RLC entity, the AM RLC entity may segment the RLC SDU #i based on the preset data size, for example, into M segments, and each segment is used as a payload of a corresponding AMD PDU, to obtain M AMD PDUs. In other words, the M RLC PDUs are the M AMD PDUs. Specifically, if the preset data size can be exactly divided by the data size of the RLC SDU #i, sizes of the M RLC PDUs are the same, or the RLC SDU #i can be divided into the M segments of a same size based on the preset data size. For example, the data size of the RLC SDU #i is 800 bytes, and the preset data size is 100 bytes. The RLC SDU #i may be divided into eight segments based on the preset data size, each segment is 100 bytes, and content of each segment of 100 bytes is used as a payload of a corresponding RLC PDU. In this case, sizes of the payload parts of the eight RLC PDUs are the same, that is, 100 bytes. If a header of each RLC PDU is set to a fixed size, for example, 20 bytes, overall sizes of the eight RLC PDUs are the same, that is, 120 bytes. If the preset data size cannot be exactly divided by the data size of the RLC SDU #i, sizes of some of the M RLC PDUs are the same. For example, some of the M RLC PDUs, for example, M-1 RLC PDUs, may be obtained by segmenting the RLC SDU #i based on the preset data size. In other words, payload sizes of the M-1 RLC PDUs may all be the preset data size. The other of the M RLC PDUs, for example, an RLC PDU (denoted as an RLC PDU #M) other than the M-1 RLC PDUs, may not be obtained by segmenting the RLC SDU #i based on the preset data size. For example, a payload size of the RLC PDU #M may be a remainder obtained by dividing the data size of the RLC SDU #i by the preset data size. It may be understood that the payload size may also be understood as the foregoing data field, and the payload size and the data field may be replaced for representation. In addition, a specific RLC PDU that the RLC PDU #M is specifically in the M RLC PDUs is not limited in this embodiment of this application. For example, the RLC PDU #M may be the first RLC PDU, the last RLC PDU, or a middle RLC PDU, provided that the RLC PDU #M is agreed on in advance through interaction between the first communication apparatus and the second communication apparatus. For example, the first communication apparatus sends a message to the second communication apparatus, to indicate a location of the RLC PDU #M, for example, a specific RLC PDU in the M RLC PDUs. The message may be an existing message, such as an RRC message, a medium access control element (medium access control-control element, MAC-CE) message, or a downlink control information (downlink control information, DCI) message, and the existing message may carry a new information element. The new information element may be a bit string, for example, three bits. 000 indicates that the RLC PDU #M is specifically the first one in the M RLC PDUs, 001 indicates that the RLC PDU #M is specifically the second one in the M RLC PDUs, 010 indicates that the RLC PDU #M is specifically the third one in the M RLC PDUs, and so on. Alternatively, the new information element may be an enumerated type, for example, six bits. 000001 indicates that the RLC PDU #M is specifically the first one in the M RLC PDUs, 000010 indicates that the RLC PDU #M is specifically the second one in the M RLC PDUs, 000100 indicates that the RLC PDU #M is specifically the third one in the M RLC PDUs, and so on. Alternatively, there may be any other possible implementation. This is not specifically limited. Alternatively, the message may be a newly defined message, to indicate, by using a name of the newly defined message or an information element carried in the message, a specific RLC PDU that the RLC PDU #M is specifically in the M RLC PDUs. Specific implementation is not limited. Alternatively, a specific RLC PDU that the RLC PDU #M may be specifically in the M RLC PDUs may be defined in a protocol.

For example, if the data size of the RLC SDU #i is 780 bytes, the preset data size is 100 bytes, and a remainder of 780/100 is 80 bytes, the first communication apparatus may divide the RLC SDU #i into eight segments, where seven segments may be segmented based on the preset data size, and the other one segment is segmented based on the remainder of 80 bytes. For example, payload sizes of the first RLC PDU to the seventh RLC PDU are the same, that is, 100 bytes, and a payload size of the eighth RLC PDU (that is, the RLC PDU#M) is different that of the first seven RLC PDUs, that is, 80 bytes. If a header of each RLC PDU is set to a fixed size, for example, 20 bytes, overall sizes of the first RLC PDU to the seventh RLC PDU are the same, that is, 120 bytes, and an overall size of the eighth RLC PDU is 100 bytes, which is different from that of the first seven RLC PDUs.

It may be understood that the foregoing segmentation manners are merely some examples and are not limited. Segmentation may be performed in another manner. For example, when the preset data size cannot be exactly divided by the data size of the RLC SDU #i, the payload size of the RLC PDU #M may be a remainder of dividing the data size of the RLC SDU #i by the preset data size plus at least one time the preset data size. For example, the data size of the RLC SDU #i is 780 bytes, the preset data size is 100 bytes, and the remainder of 780/100 is 80 bytes. The first communication apparatus may divide the RLC SDU #i into seven segments, where six segments may be segmented based on the preset data size of 100 bytes, and the other one segment is segmented based on the remainder of 80 bytes plus the preset data size of 100 bytes, that is, 180 bytes. For example, payload sizes of the first RLC PDU to the sixth RLC PDU are the same, that is, 100 bytes, and a payload size of the seventh RLC PDU is different from that of the first six RLC PDUs, that is, 180 bytes.

It can be learned that, when segmentation is performed based on the preset data size, actual segmentation may alternatively be dynamically determined based on the size of the RLC SDU. For example, in M segments of the RLC SDU, sizes of M-1 segments are the preset data size, and a size of the remaining one segment is a size of a remainder. This simplifies segmentation, and ensures flexibility, so as to be applicable to RLC SDUs of different sizes.

### Manner 2: Perform segmentation based on the preset segment quantity:

The preset segment quantity may indicate that a segment quantity needs to be a preset value. The preset segment quantity may be a segment quantity predefined in a protocol. For example, the protocol defines a specific segment quantity based on which the RLC SDU needs to be segmented. Alternatively, the preset segment quantity may be dynamically determined by the first communication apparatus, for example, determined based on at least one of the following: a size of the RLC SDU #i, quality of communication between the first communication apparatus and the second communication apparatus, and a CE of the first communication apparatus or the second communication apparatus. The following provides separate descriptions.
(a) The size of the RLC SDU #i may be positively correlated with the preset segment quantity, so that a segment size is fixed as the size of the RLC SDU changes, thereby avoiding excessively high transmission complexity caused by an excessively large segment. For example, the first communication apparatus and/or the second communication apparatus may configure correspondences between different RLC SDU size intervals and different preset segment quantities. For example, an RLC SDU (0,400) corresponds to a preset segment quantity 4, an RLC SDU [400, 1000) corresponds to a preset segment quantity 8, an RLC SDU [1000, 1600) corresponds to a preset segment quantity 12, and so on. Details are not described again.

It should be understood that the positive correlation between the size of the RLC SDU #i and the preset segment quantity is merely an example. For example, the size of the RLC SDU #i may alternatively be negatively correlated with the preset segment quantity.

The first communication apparatus and/or the second communication apparatus may determine, according to a rule predefined in a protocol, the preset segment quantity corresponding to the RLC SDU #i. For example, the first communication apparatus and/or the second communication apparatus may determine, by using a UE, a session, or a DRB as a granularity, the preset segment quantity corresponding to the RLC SDU #i. For specific implementation, refer to the foregoing related descriptions. Details are not described herein again.

(b) The quality of communication between the first communication apparatus and the second communication apparatus may be positively correlated with the preset segment quantity. For example, better quality of communication between the first communication apparatus and the second communication apparatus means that communication complexity may be higher, and the preset segment quantity may also be larger. Still using RSRP as an example, the first communication apparatus and/or the second communication apparatus may configure correspondences between different RSRP intervals and different preset segment quantities. The first communication apparatus and/or the second communication apparatus may measure RSRP of the first communication apparatus and the second communication apparatus, and determine a corresponding preset segment quantity based on an RSRP interval in which the measured RSRP is located.

It should be understood that the positive correlation between the communication quality and the preset data size is merely an example. For example, the communication quality may alternatively be negatively correlated with the preset data size.

(c) Similar to the foregoing description, a higher CE level indicates a stronger capability of resisting a signal attenuation, which means that communication complexity may be higher, and the preset segment quantity may also be smaller, so that each segment may be longer. The first communication apparatus and/or the second communication apparatus may preconfigure correspondences between different CE levels and different preset segment quantities. For example, a CE 0 corresponds to a preset segment quantity 12, a CE 1 corresponds to a preset segment quantity 8, and a CE 2 corresponds to a preset segment quantity 4. The first communication apparatus may determine, based on a CE of the first communication apparatus or a CE reported by the second communication apparatus in advance, a preset segment quantity corresponding to the CE.

It may be understood that the preset segment quantity is an example name, and may be replaced with any possible name, for example, a segment quantity or a target segment quantity.

The first communication apparatus may segment the RLC SDU #i based on the preset segment quantity, to obtain the M RLC PDUs. For example, the RLC SDU #i is transferred by a PDCP entity of the first communication apparatus to the RLC entity of the first communication apparatus. If the RLC entity of the first communication apparatus is a UM RLC entity, the UM RLC entity may segment the RLC SDU #i based on the preset segment quantity, for example, into M segments, and each segment may be used as a payload of a corresponding UMD PDU, to obtain M UMD PDUs. If the RLC entity of the first communication apparatus is an AM RLC entity, the AM RLC entity may segment the RLC SDU #i based on the preset segment quantity, for example, into M segments, and each segment is used as a payload of a corresponding AMD PDU, to obtain M AMD PDUs.

Specifically, if the preset segment quantity can be exactly divided by the data size of the RLC SDU #i, sizes of the M RLC PDUs are the same, or the RLC SDU #i can be divided into the M segments of a same size based on the preset segment quantity.

For example, the data size of the RLC SDU #i is 800 bytes, the preset segment quantity is 8, and 800/8=100, that is, the division is exact. The RLC SDU #i may be divided into eight segments based on the preset segment quantity, each segment is 100 bytes, and content of each segment of 100 bytes is used as a payload of a corresponding RLC PDU. In this case, sizes of the payload parts of the eight RLC PDUs are the same, that is, 100 bytes. If a header of each RLC PDU is set to a fixed size, for example, 20 bytes, overall sizes of the eight RLC PDUs are the same, that is, 120 bytes.

If the preset segment quantity cannot be exactly divided by the data size of the RLC SDU #i, size parts of the M RLC PDUs are the same. For example, when the preset segment quantity is not exactly divided, the first communication apparatus may round up or round down a result of dividing the data size of the RLC SDU #i by the preset segment quantity. Using rounding up as an example, rounding down can be understood by analogy. A value obtained by rounding up may be used as a basis for a length of a segment. Some of the M RLC PDUs, for example, M-1 RLC PDUs, may be obtained by segmenting the RLC SDU #i based on the value obtained by rounding up. In other words, payload sizes of the M-1 RLC PDUs may all be the value obtained by rounding up. The other of the M RLC PDUs, for example, an RLC PDU (denoted as an RLC PDU #M) other than the M-1 RLC PDUs, may not be obtained by segmenting the RLC SDU #i based on the value obtained by rounding up. For example, a payload size of the RLC PDU #M may be a remainder obtained by dividing the data size of the RLC SDU #i by the preset segment quantity. It may also be understood that a specific RLC PDU that the RLC PDU #M is specifically in the M RLC PDUs is not limited in this embodiment of this application. For example, the RLC PDU #M may be the first RLC PDU, the last RLC PDU, or a middle RLC PDU, provided that the RLC PDU #M is agreed on in advance through interaction between the first communication apparatus and the second communication apparatus, or may be defined in a protocol. For specific implementation, refer to the foregoing related descriptions. Details are not described herein again.

For example, the data size of the RLC SDU #i is 780 bytes, the preset segment quantity is 8, 780/8=97.5, which rounds up to 98, and a remainder of 780/98 is 94. The first communication apparatus may divide the RLC SDU #i into eight segments based on the segment size of 98 bytes, where seven segments may be segmented based on 98 bytes, and the other one segment is segmented based on the remainder of 94 bytes. For example, payload sizes of the first RLC PDU to the seventh RLC PDU are the same, that is, 94 bytes, and a payload size of the eighth RLC PDU (that is, the RLC PDU #M) is different from that of the first seven RLC PDUs, that is, 94 bytes. If a header of each RLC PDU is set to a fixed size, for example, 20 bytes, overall sizes of the first RLC PDU to the seventh RLC PDU are the same, that is, 118 bytes, and an overall size of the eighth RLC PDU is 114 bytes, which is different from that of the first seven RLC PDUs.

It may be understood that the foregoing segmentation manners are merely some examples and are not limited. Segmentation may be performed in another manner. For example, when the value obtained by rounding up cannot be exactly divided by the data size of the RLC SDU #i, the payload size of the RLC PDU #M may be a remainder of dividing the data size of the RLC SDU #i by the value obtained by rounding up plus at least one time the value obtained by rounding up. For example, the data size of the RLC SDU #i is 780 bytes, the value obtained by rounding up is 98 bytes, and the remainder of 780/98 is 94 bytes. The first communication apparatus may divide the RLC SDU #i into seven segments, where six segments may be segmented based on the value obtained by rounding up of 98 bytes, and the other one segment is segmented based on the remainder of 94 bytes plus the value obtained by rounding up of 98 bytes, that is, 192 bytes. For example, payload sizes of the first RLC PDU to the sixth RLC PDU are the same, that is, 98 bytes, and a payload size of the seventh RLC PDU is different from that of the first six RLC PDUs, that is, 192 bytes.

It can be learned that, when segmentation is performed based on the preset segment quantity, an actual segmentation size may alternatively be dynamically determined based on the value obtained by rounding up or a value obtained by rounding down. For example, in M segments of the RLC SDU, sizes of M-1 segments are the value obtained by rounding up, and a size of the remaining one segment is a size of a remainder. This simplifies segmentation, and ensures flexibility, so as to be applicable to RLC SDUs of different sizes.

It may be further understood that the manner 1 and the manner 2 may alternatively be combined. For example, the RLC SDU #i is segmented based on both the preset data size and the preset segment quantity. For example, the RLC SDU #i is divided into a first part and a second part, the first part is segmented based on the preset data size, and the second part is segmented based on the preset segment quantity. A ratio of the first part to the second part may be agreed upon in advance between the first communication apparatus and the second communication apparatus through interaction. For example, the first communication apparatus sends a message to the second communication apparatus, to indicate the ratio of the first part to the second part. The message may be an existing message such as an RRC message, a DCI message, or a MAC-CE message, and the existing message may carry a new information element. The new information element may be a bit string, for example, three bits. 000 indicates that the ratio of the first part to the second part is 1:1, 001 indicates that the ratio of the first part to the second part is 1:2, 010 indicates that the ratio of the first part to the second part is 2:1, and so on. Details are not described again. Alternatively, the new information element may be an enumerated type, where a bit value 1 indicates the first part, a bit value 0 indicates the second part, and the ratio of the first part to the second part may be indicated by a quantity of bits with values of 0 and 1, for example, 6 bits. 111000 indicates that the ratio of the first part to the second part is 1:1, 110000 indicates that the ratio of the first part to the second part is 1:2, 111100 indicates that the ratio of the first part to the second part is 2:1, and so on. Details are not described again. Alternatively, there may be any other possible implementation. This is not specifically limited. Alternatively, the message may be a newly defined message, to indicate the ratio of the first part to the second part by using a name of the newly defined message or an information element carried in the message. Specific implementation is not limited. Alternatively, the ratio of the first part to the second part may be defined in a protocol. For example, the RLC SDU #i is 1600 bytes, the first 600 bytes are divided into four segments based on a preset data size of 150 bytes, and the last 1000 bytes are divided into six segments based on a preset segment quantity of 6.

In addition, the manner 1 and the manner 2 may also be applicable to different types of RLC entities. For example, the UM RLC entity of the first communication apparatus and/or that of the second communication apparatus perform segmentation based on the preset data size, and the AM RLC entity of the first communication apparatus and/or that of the second communication apparatus perform segmentation based on the preset segment quantity. For another example, the UM RLC entity of the first communication apparatus and/or that of the second communication apparatus perform segmentation based on the preset segment quantity, and the AM RLC entity of the first communication apparatus performs segmentation based on the preset data size. A rule for segmenting a specific type of RLC entity based on the preset data size or the preset segment quantity may be preset in a protocol, or may be configured by the first communication apparatus for the second communication apparatus, or may be configured by the second communication apparatus for the first communication apparatus, or may be separately configured by another device for the first communication apparatus and the second communication apparatus. For example, the first communication apparatus sends a message to the second communication apparatus. The message may be an existing message, and the existing message may carry a new information element. The new information element may be a bit string, and indicates a combination of segmentation manners of different types of RLC entities, for example, three bits. 000 indicates that the AM RLC entity performs segmentation based on the preset data size, and that the UM RLC entity performs segmentation based on the preset segment quantity, 001 indicates that the AM RLC entity performs segmentation based on the preset segment quantity, and that the UM RLC entity performs segmentation based on the preset data size, and so on. Details are not described again. Alternatively, the new information element may be an enumerated type, and different values of each bit correspond to different segmentation manners of one type of RLC entity. Alternatively, the message may be a newly defined message, to indicate segmentation rules of different types of RLC entities by using a name of the newly defined message or an information element carried in the message. Specific implementation is not limited.

The first communication apparatus may further add a sequence number of an RLC PDU to each of the M RLC PDUs. For example, an i^{th} RLC PDU in the M RLC PDUs carries a sequence number of the i^{th} RLC PDU, and i is any integer from 1 to M, to indicate that the i^{th} RLC PDU is the i^{th} of the M RLC PDUs, or that the i^{th} RLC PDU is an i^{th} segment in an RLC SDU #i.

For example, the i^{th} RLC PDU is a UMD PDU, and a frame structure of the i^{th} RLC PDU may be shown in Table 13.

**Table 13**

| | | | |
|---|---|---|---|
| SI | segN | SN | Oct1 |
| SN | | | Oct2 |
| Data | | | Oct3 |
| ... | | | ... |
| ... | | | OctN |

For another example, the i^{th} RLC PDU is an AMD PDU, and a frame structure of the i^{th} RLC PDU may be shown in Table 14.

**Table 14**

| | | | | | |
|---|---|---|---|---|---|
| D/C | P | SI | segN | SN | Oct1 |
| SN | | | | | Oct2 |
| SN | | | | | Oct3 |
| Data | | | | | Oct4 |
| ... | | | | | ... |
| ... | | | | | OctN |

As shown in Table 13 and Table 14, segN is a sequence number of the i^{th} RLC PDU, and may be specifically a bit string of three bits, to respectively indicate 0 to 7 segments. It should be understood that segN being three bits is an example. For example, segN may be a bit string of four bits, to respectively indicate 0 to 15 segments, or may be a bit string of more or fewer bits. Specifically, segN may be set based on a segment quantity, for example, may be defined in a protocol, or may be dynamically configured by a network side for different frame structures. This is not specifically limited.

S502:
The RLC entity of the first communication apparatus may transfer the M RLC PDUs to a MAC entity of the first communication apparatus, and the MAC entity of the first communication apparatus sends the M RLC PDUs to the second communication apparatus by using a physical layer. In this case, the M RLC PDUs may be directly transferred by the first communication apparatus to the second communication apparatus, or may be first transferred by the first communication apparatus to another communication apparatus, and then transferred by the another communication apparatus to the second communication apparatus. For example, the second communication apparatus may be the foregoing CU, and the another communication apparatus may be the foregoing DU. Correspondingly, a MAC entity of the second communication apparatus may receive the M RLC PDUs by using the physical layer, and transfer the M RLC PDUs to an RLC entity of the second communication apparatus.

It may be understood that the user plane protocol stack of NR shown in FIG. 1 is used as an example in S502, but this is not limited thereto. S502 may also be applicable to any possible user plane protocol stack in a future communication system. For example, in an A-IoT scenario, to simplify transmission, the A-IoT scenario may not include a MAC layer and/or a physical layer, and is directly transmitted by using a higher layer. In other words, the first communication apparatus and/or the second communication apparatus may not include the MAC layer and/or the physical layer, or in a future communication system, the MAC layer and/or the physical layer may be replaced with any possible description.

S503:
RLC SDU segmentation is aligned in advance between the first communication apparatus and the second communication apparatus, or is agreed on. For example, the second communication apparatus may configure the preset data size and/or the preset segment quantity in a manner predefined in a protocol, or the second communication apparatus may dynamically determine the preset data size and/or the preset segment quantity in a manner similar to that of the first communication apparatus. For example, the preset data size and/or the preset segment quantity may be determined based on at least one of the following: quality of communication between the first communication apparatus and the second communication apparatus, and a CE of the first communication apparatus or the second communication apparatus. For specific implementation, refer to the foregoing related descriptions of S501. Details are not described herein again.

In this way, the second communication apparatus may determine their respective payload sizes of the M RLC PDUs, to obtain their respective payload parts of the M RLC PDUs. For example, the UM RLC entity of the second communication apparatus is equivalent to the UM RLC entity of the first communication apparatus, and the UM RLC entity of the second communication apparatus may obtain their respective payload parts of the M UMD PDUs. Alternatively, the AM RLC entity of the second communication apparatus is equivalent to the AM RLC entity of the first communication apparatus, and the AM RLC entity of the second communication apparatus may obtain their respective payload parts of the M AMD PDUs. Then, the second communication apparatus may concatenate and combine their respective payload parts of the M RLC PDUs based on their respective sequence numbers of the M RLC PDUs, to obtain the RLC SDU #i. For example, the UM RLC entity of the second communication apparatus may concatenate and combine their respective payload parts of the M UMD PDUs based on their respective sequence numbers of the M UMD PDUs, to obtain the RLC SDU #i; or the AM RLC entity of the second communication apparatus may concatenate and combine their respective payload parts of the M AMD PDUs based on their respective sequence numbers of the M AMD PDUs, to obtain the RLC SDU #i.

It may be understood that, when the M RLC PDUs have a same size part, for example, the RLC PDU #M, because the second communication apparatus may determine an overall size of the RLC PDU #M in a receiving process, and the second communication apparatus can know a header size of the RLC PDU in advance, the second communication apparatus may also determine a payload size of the RLC PDU #M.

Optionally, with reference to S501 to S503, before S502, the method may further include: The first communication apparatus sends first configuration information to the second communication apparatus, and correspondingly, the second communication apparatus receives the first configuration information from the first communication apparatus.

The first configuration information may indicate that the segmentation of an RLC SDU is based on a segment data size and/or a segment quantity, so as to implement segmentation alignment and avoid a transmission error. The RLC SDU segmentation is a manner in which the RLC SDU is segmented. For example, the RLC SDU segmentation may be indicated by a 1-bit information element in the first configuration information. Two values 0 and 1 of the information element respectively indicate whether the RLC SDU segmentation is a manner in the conventional technology or the manner in this embodiment of this application. For example, segmentation is performed based on the segment data size by default, or segmentation is performed based on the segment quantity size by default, or segmentation is performed based on the segment data size and the segment quantity by default. For another example, the RLC SDU segmentation may be indicated by a 2-bit information element in the first configuration information. For example, the information element is a bit string of two bits, and different combinations of bit values indicate different segmentation manners. For example, 00 indicates that the RLC SDU segmentation is using the conventional technology, and another value indicates that segmentation is performed in the manner in this embodiment of this application. For example, 01 indicates that the segmentation of an RLC SDU is based on the segment data size, 10 indicates that the segmentation of an RLC SDU is based on the segment quantity, and 11 indicates that the segmentation of an RLC SDU is based on the segment data size and the segment quantity. For still another example, the RLC SDU segmentation may be indicated by a 3-bit information element in the first configuration information. The information element may be an enumerated type of three bits, and each bit indicates a corresponding segmentation manner. For example, 001 indicates that the RLC SDU segmentation is using the conventional technology, and another value indicates that segmentation is performed in the manner in this embodiment of this application. For example, 010 indicates that the segmentation of an RLC SDU is based on the segment data size, 100 indicates that the segmentation of an RLC SDU is based on the segment quantity, and 110 indicates that the segmentation of an RLC SDU is based on the segment data size and the segment quantity.

It should be understood that implementation of the information element indicating the RLC SDU segmentation is merely an example. For example, the information element may be more bits. This is not specifically limited.

The first configuration information may be carried in any possible message, and may be an existing message such as an RRC message, a MAC-CE message, or a DCI message, or may be a message newly defined in the future. This is not limited herein.

Because the first configuration information indicates the RLC SDU segmentation, when receiving the RLC PDU, the second communication apparatus may perform packet assembly in the segmentation. For example, if the first configuration information indicates that the segmentation of an RLC SDU is based on the segment data size, when receiving the M RLC PDUs, the second communication apparatus may determine, based on the M RLC PDUs, that the configured preset data size needs to be used for packet assembly. In this way, the second communication apparatus may obtain their respective payload parts of the M RLC PDUs based on the preset data size, and concatenate the payload parts to obtain the RLC SDU #i. If the first configuration information indicates that the segmentation of an RLC SDU is based on the segment quantity, when receiving the M RLC PDUs, the second communication apparatus may determine, based on the M RLC PDUs, that the locally preconfigured preset segment quantity needs to be used for packet assembly. In this way, the second communication apparatus may obtain their respective payload parts of the M RLC PDUs based on the preset segment quantity, and concatenate the payload parts to obtain the RLC SDU #i. If the first configuration information indicates that the segmentation of an RLC SDU is based on the segment data size and the segment quantity, when receiving the M RLC PDUs, the second communication apparatus may determine, based on the M RLC PDUs, that the locally preconfigured preset data size and preset segment quantity needs to be used for packet assembly. In this way, the second communication apparatus may obtain their respective payload parts of some of the M RLC PDUs based on the preset data size, obtain their respective payload parts of the other of the M RLC PDUs based on the preset segment quantity, and concatenate the payload parts to obtain the RLC SDU #i.

It may be understood that the first communication apparatus indicates the RLC SDU segmentation to the second communication apparatus, so as to implement segmentation alignment, thereby avoiding a receiving failure caused when the second communication apparatus performs packet assembly in a segmentation manner different from that of the first communication apparatus. In addition, the RLC SDU segmentation is an example name, and may be replaced with any possible name, for example, an RLC SDU segmentation indication or RLC SDU segmentation information. This is not specifically limited herein.

Optionally, with reference to S501 to S503, before S502, the method may further include: The first communication apparatus sends second configuration information to the second communication apparatus, and correspondingly, the second communication apparatus receives the second configuration information from the first communication apparatus.

The second configuration information may indicate that the segment data size is the preset data size and/or the segment quantity is the preset segment quantity, so as to dynamically configure the preset data size and/or the preset segment quantity of the segment, thereby implementing segmentation more flexibly. For example, the second configuration information may be a new information element. The new information element may indicate a value of the preset data size and/or the preset segment quantity, that is, explicitly indicate the value of the preset data size, or may indicate an index of the preset data size and/or the preset segment quantity (different indexes correspond to different values of the preset data size, that is, implicitly indicate the value of the preset data size). Alternatively, the second configuration information may indicate the preset data size and/or the preset segment quantity by reusing an existing information element. Specific implementation is not limited. In this case, the preset data size may implicitly indicate that the segmentation of an RLC SDU is based on the segment data size. Similarly, the preset segment quantity may implicitly indicate that the segmentation of an RLC SDU is based on the segment quantity. In addition, the second configuration information may be carried in any possible message, and may be an existing message such as an RRC message, a MAC-CE message, or a DCI message, or may be a message newly defined in the future, to explicitly or implicitly indicate a value of the preset data size by using a name of the newly defined message or an information element carried in the message. This is not limited herein. In addition, the second configuration information and the first configuration information may be carried in a same message, to reduce a quantity of communication times and reduce overheads. Alternatively, the second configuration information and the first configuration information may be carried in different messages, to implement decoupling and make information transmission more flexible.

If the second communication apparatus has not preconfigured a preset data size and/or a preset segment quantity, after receiving the second configuration information, the second communication apparatus may store the preset data size and/or the preset segment quantity that are/is indicated by the second configuration information. Alternatively, if the second communication apparatus has preconfigured a preset data size and/or a preset segment quantity, after receiving the second configuration information, the second communication apparatus may update the stored preset data size and/or preset segment quantity to the preset data size and/or the preset segment quantity that are/is indicated by the second configuration information.

It can be learned that, when the first communication apparatus determines the preset data size and/or the preset segment quantity, the first communication apparatus may configure the preset data size and/or the preset segment quantity for the second communication apparatus. Alternatively, when the second communication apparatus determines the preset data size and/or the preset segment quantity, the second communication apparatus may configure the preset data size and/or the preset segment quantity for the first communication apparatus. Specific implementation is similar to the foregoing configuration of the first communication apparatus, and can be understood by analogy. Details are not described herein again.

Alternatively, the first communication apparatus and the second communication apparatus may each determine a preset data size and/or a preset segment quantity according to a same rule predefined in a protocol or a same rule pre-aligned through interaction. For example, the first communication apparatus or the second communication apparatus may notify a peer device of a rule of a granularity (a UE, a session, a DRB, or the like), for example, a correspondence between an RLC SDU size interval and a preset data size and/or a preset segment quantity, to implement a same rule aligned through interaction. Specifically, an existing message or a newly defined message may be reused for implementation, which can be understood with reference to the foregoing descriptions. Details are not described again. In this case, the first communication apparatus and the second communication apparatus may not need to configure the preset data sizes and/or the preset segment quantities (for example, values of the preset data sizes and/or the preset segment quantities determined by the two parties are the same). Certainly, the preset data sizes and/or the preset segment quantities may also be configured, to confirm that values of the preset data sizes and/or the preset segment quantities determined by the two parties are the same, so that the preset data size and/or the preset segment quantity determined by one party can be selected in different cases, thereby implementing alignment.

Optionally, with reference to S501 to S503, the second communication apparatus may alternatively indicate the RLC SDU segmentation more dynamically. For example, an RLC PDU in the M RLC PDUs may include first indication information, and the first indication information may indicate that the segmentation of an RLC SDU is based on a segment data size and/or a segment quantity. A specific implementation may be similar to the foregoing RLC SDU segmentation indicated by the first configuration information, and can be understood by analogy. Details are not described herein again. The first indication information may be carried in a header of each of the M RLC PDUs.

For example, the i^{th} RLC PDU is a UMD PDU, and a frame structure of the i^{th} RLC PDU may be shown in Table 15.

**Table 15**

| | | | |
|---|---|---|---|
| SI | segN | Re | Oct1 |
| SN | | | Oct2 |
| Data | | | Oct3 |
| ... | | | ... |
| ... | | | OctN |

For another example, the i^{th} RLC PDU is an AMD PDU, and a frame structure of the i^{th} RLC PDU may be shown in Table 16.

**Table 16**

| | | | | | |
|---|---|---|---|---|---|
| D/C | P | SI | segN | Re | Oct1 |
| | | SN | | | Oct2 |
| SN | | | | | Oct3 |
| Data | | | | | Oct4 |
| ... | | | | | ... |
| ... | | | | | OctN |

As shown in Table 15 and Table 16, Re is the first indication information, and may be specifically a bit string of three bits, to indicate 0 to 7 segments. It should be understood that Re being three bits is an example. For example, Re may be a bit string of four bits, or may be a bit string of more or fewer bits. This is not specifically limited.

The second communication apparatus may determine, based on the first indication information carried in each of the M RLC PDUs, RLC SDU segmentation in which each RLC PDU is obtained through segmentation. For example, if the second communication apparatus determines that the first indication information carried in each of the M RLC PDUs indicates that the segmentation of an RLC SDU is based on the data size, the second communication apparatus may perform packet assembly based on the locally preconfigured preset data size, to obtain the RLC SDU #i. If the second communication apparatus determines that the first indication information carried in each of the M RLC PDUs indicates that the segmentation of an RLC SDU is based on the segment quantity, the second communication apparatus may perform packet assembly based on the locally preconfigured preset segment quantity, to obtain the RLC SDU #i. If the second communication apparatus determines that the first indication information carried in the first K RLC PDUs (K is an integer greater than or equal to 2 and less than or equal to M-2) in the M RLC PDUs indicates that the segmentation of an RLC SDU is based on the data size, and the first indication information carried in the last M-K RLC PDUs in the M RLC PDUs indicates that the segmentation of an RLC SDU is based on the segment quantity, the second communication apparatus may perform packet assembly on the first K RLC PDUs based on the locally preconfigured preset data size, and perform packet assembly on the last M-K RLC PDUs based on the locally preconfigured preset segment quantity, to obtain the RLC SDU #i.

It may be understood that the first indication information is added to the RLC PDU, so that different segmentation manners can be used for different RLC SDUs. The different segmentation manners used for the different RLC SDUs are indicated to the second communication apparatus by using the first indication information, so that transmission can be more flexible. For example, an RLC SDU #i-1 is segmented based on the data size, the RLC SDU #i is segmented based on the segment quantity, and an RLC SDU #i+1 is segmented based on the data size and the segment quantity. Certainly, if the M RLC PDUs do not carry the first indication information, it may be considered that RLC SDU segmentation of the RLC SDU #i is the same as RLC SDU segmentation of an RLC SDU of a previous sequence number, for example, the RLC SDU #i-1.

Optionally, with reference to S501 to S503, the RLC PDU (for example, any one or more RLC PDUs) in the M RLC PDUs may further include second indication information.

The second indication information may indicate that the segment data size is the preset data size and/or the segment quantity is the preset segment quantity, so as to dynamically configure the preset data size and/or the preset segment quantity of the segment, thereby implementing segmentation more flexibly. In this case, the preset data size may implicitly indicate that the segmentation of an RLC SDU is based on the segment data size. Similarly, the preset segment quantity may implicitly indicate that the segmentation of an RLC SDU is based on the segment quantity. The second indication information may indicate a specific value of the preset data size and/or the preset segment quantity, or may indicate a type of the preset data size and/or the preset segment quantity, and different types correspond to different specific values. The second indication information is carried in any possible location of the RLC PDU, for example, may be carried in a header, or may be carried in a payload. This is not specifically limited.

For example, the second indication information is a bit string of three bits. 000 indicates a type 0, and the type 0 corresponds to a preset data size 50. 001 indicates a type 1, and the type 1 corresponds to a preset data size 100. 010 indicates a type 2, and the type 2 corresponds to a preset data size 150. 011 indicates a type 3, and the type 3 corresponds to a preset data size 200. 100 indicates a type 4, and the type 4 corresponds to a preset segment quantity 2. 101 indicates a type 5, and the type 5 corresponds to a preset segment quantity 4. 110 indicates a type 6, and the type 6 corresponds to a preset segment quantity 8. 111 indicates a type 7, and the type 7 corresponds to a preset segment quantity 12.

If the second communication apparatus has not preconfigured a preset data size and/or a preset segment quantity, after receiving the second indication information, the second communication apparatus may locally store the preset data size and/or the preset segment quantity that are/is indicated by the second indication information. Alternatively, if the second communication apparatus has preconfigured a preset data size and/or a preset segment quantity, after receiving the second indication information, the second communication apparatus may update the locally prestored preset data size and/or preset segment quantity to the preset data size and/or the preset segment quantity that are/is indicated by the second indication information.

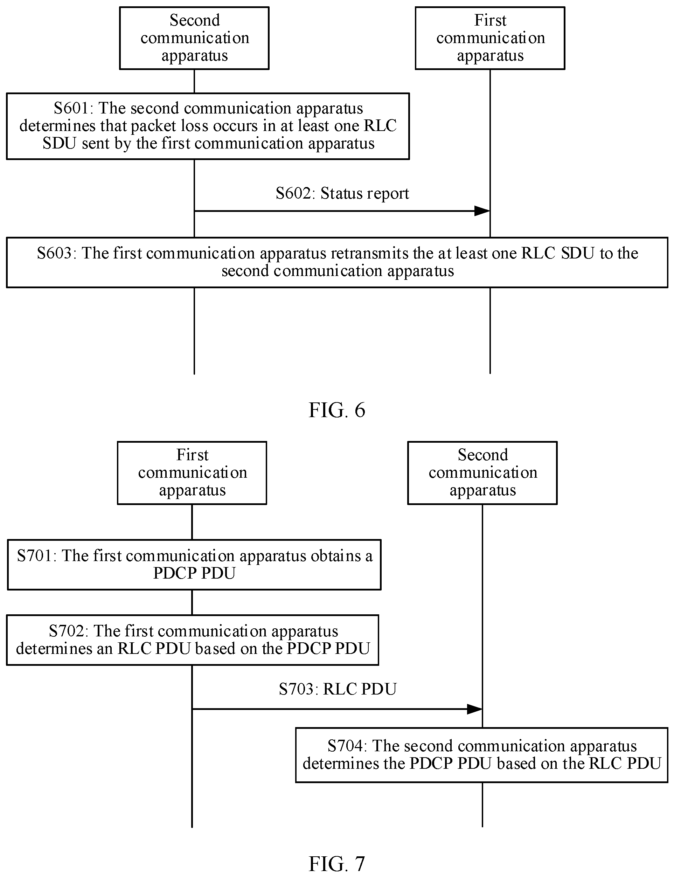

FIG. 6 is a schematic flowchart 2 of a communication method according to an embodiment of this application. The communication method is applicable to the foregoing communication system, and mainly relates to interaction between a first communication apparatus and a second communication apparatus. Specifically, when packet loss occurs in an RLC SDU, the second communication apparatus may feed back a status report to the first communication apparatus, to indicate a packet loss status of the RLC SDU. The status report may be designed in a simplified manner, so that overheads of feeding back the status report can be reduced. In addition, the method procedure shown in FIG. 6 may also be implemented in combination with the method procedure shown in FIG. 5, or may be implemented separately. Details are described below.

Specifically, as shown in FIG. 6, a procedure of the communication method is as follows.

S601: The second communication apparatus determines that packet loss occurs in at least one RLC SDU sent by the first communication apparatus.

The at least one RLC SDU may be an RLC SDU that is segmented according to the method in this embodiment of this application, or may be segmented according to a manner in the conventional technology. This is not specifically limited. For any one of the at least one RLC SDU, the packet loss of the RLC SDU may be that the RLC SDU is completely lost, or may be that some segments in the RLC SDU are lost. This is not specifically limited.

It may be understood that a manner in which the second communication apparatus determines that packet loss occurs in the at least one RLC SDU may be implemented by reusing the conventional technology. Details are not described herein again.

S602: The second communication apparatus sends a status report to the first communication apparatus. Correspondingly, the first communication apparatus receives the status report from the second communication apparatus.

S603: The first communication apparatus retransmits the at least one RLC SDU to the second communication apparatus.

The first communication apparatus may determine, based on the status report, that packet loss occurs in the at least one RLC SDU, for example, a specific RLC SDU that is completely lost in the at least one RLC SDU, and/or a specific segment in a specific RLC SDU that is lost, to perform retransmission, so as to reduce a quantity of lost packets as much as possible through retransmission, and improve transmission reliability.

S602:
The status report may indicate that packet loss occurs in the at least one RLC SDU. Specifically, the status report may indicate the packet loss in a plurality of manners. For example, a packet loss status of each RLC SDU may be separately indicated, or a packet loss status of the at least one RLC SDU may be indicated. Details are described below.

In a possible solution, the status report specifically indicates a difference between a sequence number of each of the at least one RLC SDU and a sequence number (for example, ACK_SN) of an acknowledged RLC SDU, or a sequence number offset. In other words, NACK_SN may be a sequence number offset. The sequence number of the RLC SDU may be a sequence number of the RLC SDU in a DRB, indicating a specific RLC SDU that the RLC SDU is in the DRB. For example, the sequence number of the acknowledged RLC SDU is 100, the sequence number of the RLC SDU with the packet loss is 110, and a difference between the sequence numbers of the two is 10. Compared with that the status report indicates the sequence number 110 of the RLC SDU, that the status report indicates the difference 10 requires a smaller quantity of bits, so that overheads of the status report can be reduced.

For example, a frame structure of the status report may be shown in Table 17.

**Table 17**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN (sequence number offset) | | | | | | | | Oct4 |
| E1 | E2 | E3 | R | R | R | R | R | Oct5 |
| NACK_SN (sequence number offset) | | | | | | | | Oct6 |
| E1 | E2 | E3 | R | R | R | R | R | Oct7 |
| SOstart | | | | | | | | Oct8 |
| SOstart | | | | | | | | Oct9 |
| SOend | | | | | | | | Oct10 |
| SOend | | | | | | | | Oct11 |
| ... | | | | | | | | ... |

As shown in Table 17, NACK_SN is the sequence number offset, and a quantity of NACK_SNs is equal to a quantity of RLC SDUs in which packet loss occurs.

Any one of the at least one RLC SDU is denoted as a first RLC SDU. If the first RLC SDU is completely lost, the status report may directly indicate a difference between a sequence number of the first RLC SDU and the sequence number of the acknowledged RLC SDU, for example, include NACK_SN of the first RLC SDU. If some segments of the first RLC SDU are lost, the status report may not only indicate the difference between the sequence number of the first RLC SDU and the sequence number of the acknowledged RLC SDU, but also indicate the lost segments in the first RLC SDU.

If the first RLC SDU is segmented according to the conventional technology, a manner in which the status report indicates the lost segments in the first RLC SDU may still use the conventional technology. For details, refer to the related descriptions of "2. RLC". Details are not described herein again. If the first RLC SDU is segmented in the manner in this embodiment of this application, the status report may indicate the lost segments in the first RLC SDU, for example, an RLC PDU, in a manner newly defined in this embodiment of this application, so that the RLC PDU can be retransmitted, thereby reducing retransmission overheads. Details are described below. Manner 1: In the segmentation in this embodiment of this application, a size of the RLC PDU or a size of the payload may be basically fixed. Therefore, the status report may specifically indicate the first data (for example, the first data in the payload) in an unsuccessfully received RLC PDU, for example, indicated by SOstart; or the status report may specifically indicate a location of the last data (for example, the last data in the payload) in an unsuccessfully received RLC PDU in the first RLC SDU, for example, indicated by SOend. The unsuccessfully received RLC PDU is an RLC PDU in which the lost segments in the first RLC SDU are located. In this way, compared with a manner in which both SOstart and SOend are indicated in the conventional technology, indicating only SOstart or SOend can reduce overheads of the status report.

For example, the first RLC SDU is 800 bytes. If the status report indicates that the location, in the first RLC SDU, of the first data in the unsuccessfully received RLC PDU is the 201^{st} byte, when the payload sizes of the RLC PDUs are all 100 bytes, the location, in the first RLC SDU, of the last data in the unsuccessfully received RLC PDU is the 300^{th} byte, and vice versa. Details are not described herein.

It may be understood that the status report may further carry an information element to indicate that the status report indicates that a segment is lost by indicating SOstart or SOend. For example, the information element may be named as an extension bit 4 field, for example, E4, or may be named by using any other possible name. This is not limited. If the status report carries E4, for example, a value of one bit in which E4 is located is 1, it indicates that the status report indicates that a segment is lost by indicating SOstart or SOend. Otherwise, if the status report does not carry E4, for example, a value of one bit in which E4 is located is 0, it indicates that the status report indicates that a segment is lost in another manner.

For example, in the manner 1, a frame structure of the status report may be shown in Table 18.

**Table 18**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | R | R | R | R | Oct5 |
| NACK_SN | | | | | | | | Oct6 |
| E1 | E2 | E3 | E4 | R | R | R | R | Oct7 |
| SOstart | | | | | | | | Oct8 |
| NACK_SN | | | | | | | | Oct9 |
| E1 | E2 | E3 | E4 | R | R | R | R | Oct10 |
| SOend | | | | | | | | Oct11 |
| NACK_range | | | | | | | | Oct12 |
| NACK_SN | | | | | | | | Oct13 |
| E1 | E2 | E3 | E4 | R | R | R | R | Oct14 |
| ... | | | | | | | | ... |

As shown in Table 18, NACK_SN may still use the conventional technology, and may indicate a sequence number of a lost RLC SDU, or may be a sequence number offset in this embodiment of this application. A length of NACK_SN is not limited to that shown in Table 18, and may be longer or shorter. This is not limited. SOstart is the location, in the RLC SDU, of the first data in the unsuccessfully received RLC PDU, and SOend is the location, in the RLC SDU, of the last data in the unsuccessfully received RLC PDU. The status report may indicate SOstart or SOend of all unsuccessfully received RLC PDUs. In addition, the unsuccessfully received RLC PDU may also be understood as a lost RLC PDU or an RLC PDU in which packet loss occurs.

Manner 2: Because a sequence number of an RLC PDU can be allocated in the segmentation in this embodiment of this application, for example, the sequence number (segN) of the i^{th} RLC PDU, the status report specifically indicates a sequence number of an unsuccessfully received RLC PDU. When a size of the RLC PDU or a size of the payload is basically fixed, a receiving end (for example, the first communication apparatus) may determine a location of the payload of the RLC PDU in the first RLC SDU based on the sequence number of the unsuccessfully received RLC PDU. In this way, compared with a manner in which both SOstart and SOend are indicated in the conventional technology, indicating the sequence number of the RLC PDU can reduce overheads of the status report.

For example, the first RLC SDU is 800 bytes. If the status report indicates that the sequence number of the unsuccessfully received RLC PDU is 3, that is, the third RLC PDU, when the payload sizes of the RLC PDUs are all 100 bytes, the receiving end may determine that the location, in the first RLC SDU, of the first data in the unsuccessfully received RLC PDU is the 201^{st} byte, and the location, in the first RLC SDU, of the last data is the 300^{th} byte.

It may be understood that the status report may further carry an information element to indicate that the status report indicates that a segment is lost by indicating the sequence number of the RLC PDU. For example, the information element may be named as an extension bit 5 field, for example, E5, or may be named by using any other possible name. This is not limited. If the status report carries E5, for example, a value of one bit in which E5 is located is 1, it indicates that the status report indicates that a segment is lost by indicating the sequence number of the RLC PDU. Otherwise, if the status report does not carry E5, for example, a value of one bit in which E5 is located is 0, it indicates that the status report indicates that a segment is lost in another manner.

For example, in the manner 2, a frame structure of the status report may be shown in Table 19.

**Table 19**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | E5 | R | R | R | Oct5 |
| NACK_SN | | | | | | | | Oct6 |
| E1 | E2 | E3 | E4 | E5 | R | R | R | Oct7 |
| segN | | | | | | | | Oct8 |
| NACK_SN | | | | | | | | Oct9 |
| E1 | E2 | E3 | E4 | E5 | R | R | R | Oct10 |
| segN | | | | | | | | Oct11 |
| NACK_range | | | | | | | | Oct12 |
| NACK_SN | | | | | | | | Oct13 |
| E1 | E2 | E3 | E4 | E5 | R | R | R | Oct14 |
| ... | | | | | | | | ... |

As shown in Table 19, NACK_SN may still use the conventional technology, and may indicate a sequence number of a lost RLC SDU, or may be a sequence number offset in this embodiment of this application. segN is the sequence number of the unsuccessfully received RLC PDU, and the status report indicates sequence numbers, that is, segNs, of all unsuccessfully received RLC PDUs. It may be further understood that, when the unsuccessfully received RLC PDU includes a plurality of consecutive RLC PDUs, the status report specifically indicates a sequence number of an RLC PDU having a smallest sequence number and a sequence number of an RLC PDU having a largest sequence number in the plurality of RLC PDUs.

Manner 3: When the unsuccessfully received RLC PDU includes a plurality of consecutive RLC PDUs, the status report specifically indicates a sequence number of an RLC PDU having a smallest sequence number in the plurality of RLC PDUs and a quantity of the plurality of RLC PDUs, for example, segN_range, or may indicate a sequence number of an RLC PDU having a largest sequence number in the plurality of RLC PDUs and a quantity of the plurality of RLC PDUs. In this way, compared with a manner in which a sequence number of each unsuccessfully received RLC PDU is indicated, this manner can reduce bits required for indication, thereby reducing overheads of the status report.

For example, the first RLC SDU is 800 bytes. If the status report indicates that the sequence number of the RLC PDU with the smallest sequence number in the plurality of unsuccessfully received RLC PDUs is 3, and the quantity of the plurality of RLC PDUs is 3, when the payload sizes of the RLC PDUs are all 100 bytes, the receiving end may determine that the location, in the first RLC SDU, of the first data in the unsuccessfully received RLC PDU is the 201^{st} byte, and the location, in the first RLC SDU, of the last data is the 500^{th} byte.

It may be understood that the status report may further carry an information element to indicate that the status report indicates that a segment is lost by providing continuous indication, that is, indicate the sequence number of the RLC PDU with the largest or smallest sequence number in the plurality of unsuccessfully received RLC PDUs, and the quantity of the plurality of RLC PDUs. For example, the information element may be named as an extension bit 6 field, for example, E6, or may be named by using any other possible name. This is not limited. If the status report carries E6, for example, a value of one bit in which E6 is located is 1, it indicates that the status report indicates that a segment is lost by providing continuous indication. Otherwise, if the status report does not carry E6, for example, a value of one bit in which E6 is located is 0, it indicates that the status report indicates that a segment is lost in another manner.

For example, in the manner 3, a frame structure of the status report may be shown in Table 20.

**Table 20**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | E5 | E6 | R | R | Oct5 |
| NACK_SN | | | | | | | | Oct6 |
| E1 | E2 | E3 | E4 | E5 | E6 | R | R | Oct7 |
| segN | | | | | | | | Oct8 |
| NACK_SN | | | | | | | | Oct9 |
| E1 | E2 | E3 | E4 | E5 | E6 | R | R | Oct10 |
| segN | | | | | | | | Oct11 |
| segN_range | | | | | | | | |
| NACK_range | | | | | | | | Oct12 |
| NACK_SN | | | | | | | | Oct13 |
| E1 | E2 | E3 | E4 | E5 | E6 | R | R | Oct14 |
| ... | | | | | | | | ... |

As shown in Table 20, NACK_SN may still use the conventional technology, and may indicate a sequence number of a lost first RLC SDU, or may be a sequence number offset in this embodiment of this application. segN is the sequence number of the RLC PDU with the smallest sequence number in the plurality of RLC PDUs or the sequence number of the RLC PDU with the largest sequence number in the plurality of RLC PDUs, and segN_range is the quantity of the plurality of RLC PDUs.

In a possible solution, if the at least one RLC SDU in which packet loss occurs includes a plurality of consecutive RLC SDUs, the status report may specifically indicate a difference between a sequence number of an RLC SDU in which packet loss occurs and a sequence number of an acknowledged RLC SDU (ACK_SN), that is, the foregoing sequence number offset, and may be specifically NACK_SN. The RLC SDU in which packet loss occurs is an RLC SDU having a smallest sequence number or an RLC SDU having a largest sequence number in the plurality of RLC SDUs, and the status report may further specifically indicate a quantity of the plurality of consecutive RLC SDUs.

It may be understood that the status report may further carry an information element to indicate that the status report indicates that an RLC SDU is lost by providing continuous indication, that is, indicate the sequence number offset and the quantity of a plurality of RLC SDUs. For example, the information element may be named as an extension bit 7 field, for example, E7, or may be named by using any other possible name. This is not limited. If the status report carries E7, for example, a value of one bit in which E7 is located is 1, it indicates that the status report indicates that an RLC SDU is lost by providing continuous indication. Otherwise, if the status report does not carry E7, for example, a value of one bit in which E7 is located is 0, it indicates that the status report indicates that an RLC SDU is lost in another manner.

For example, a frame structure of the status report may be shown in Table 21.

**Table 21**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | E5 | E6 | E7 | R | Oct5 |
| NACK_SN | | | | | | | | Oct6 |
| E1 | E2 | E3 | E4 | E5 | E6 | E7 | R | Oct7 |
| NACK_range | | | | | | | | Oct8 |
| NACK_SN | | | | | | | | Oct9 |
| E1 | E2 | E3 | E4 | E5 | E6 | E7 | R | Oct10 |
| ... | | | | | | | | ... |

As shown in Table 21, NACK_SN may still use the conventional technology, and may indicate a sequence number of a lost RLC SDU, or may be a sequence number offset in this embodiment of this application. NACK_SN may indicate the sequence number offset between the RLC SDU having the smallest sequence number or the RLC SDU having the largest sequence number and the sequence number of the acknowledged RLC SDU, and NACK_range may indicate the quantity of the plurality of RLC SDUs.

When packet loss occurs in a plurality of RLC SDUs consecutively, an RLC SDU other than an RLC SDU having a smallest sequence number or an RLC SDU having a largest sequence number in the plurality of RLC SDUs is generally completely lost. The RLC SDU having the smallest sequence number may be completely lost or may be lost from a segment. Similarly, the RLC SDU having the largest sequence number may be completely lost or may be lost to a segment. Therefore, the status report may further indicate the first lost segment in the RLC SDU having the smallest sequence number and the last lost segment in the RLC SDU having the largest sequence number. Details are described below.

### Manner A:

The status report may specifically indicate a location, in the RLC SDU having the smallest sequence number, of the first data in the RLC SDU having the smallest sequence number; and a location, in the RLC SDU having the largest sequence number, of the last data in the RLC SDU having the largest sequence number. In this way, compared with a manner in which a sequence number of each unsuccessfully received RLC SDU is indicated, this manner can reduce bits required for indication, thereby reducing overheads of the status report.

For example, a frame structure of the status report may be shown in Table 22.

**Table 22**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | E5 | E6 | E7 | R | Oct5 |
| NACK_SN | | | | | | | | Oct6 |
| E1 | E2 | E3 | E4 | E5 | E6 | E7 | R | Oct7 |
| SOstart | | | | | | | | |
| SOend | | | | | | | | |
| NACK_range | | | | | | | | Oct8 |
| NACK_SN | | | | | | | | Oct9 |
| E1 | E2 | E3 | E4 | E5 | E6 | E7 | R | Oct10 |
| ... | | | | | | | | ... |

As shown in Table 22, NACK_SN may still use the conventional technology, and may indicate a sequence number of a lost RLC SDU, or may be a sequence number offset in this embodiment of this application. SOstart indicates a location, in the RLC SDU having the smallest sequence number, of the first data in the RLC SDU having the smallest sequence number; and SOend indicates a location, in the RLC SDU having the largest sequence number, of the last data in the RLC SDU having the largest sequence number.

### Manner B:

The status report may specifically indicate a sequence number of the first lost RLC PDU in the RLC SDU having the smallest sequence number and a sequence number of the last lost RLC PDU in the RLC SDU having the largest sequence number. For the sequence number of the RLC PDU, refer to the foregoing related descriptions. Details are not described herein again. In this way, compared with a manner of indicating SOstart and SOend, indicating the sequence number of the RLC PDU requires fewer bits, so that overheads of the status report can be reduced.

For example, a frame structure of the status report may be shown in Table 23.

**Table 23**

| | | | | | | | | |
|---|---|---|---|---|---|---|---|---|
| D/C | CPT | | | ACK_SN | | | | Oct1 |
| ACK_SN | | | | | | | | Oct2 |
| E1 | R | R | R | R | R | R | R | Oct3 |
| NACK_SN | | | | | | | | Oct4 |
| E1 | E2 | E3 | E4 | E5 | E6 | E7 | R | Oct5 |
| NACK_SN | | | | | | | | Oct6 |
| E1 | E2 | E3 | E4 | E5 | E6 | E7 | R | Oct7 |
| segN | | | | | | | | |
| segN | | | | | | | | |
| NACK_range | | | | | | | | Oct8 |
| NACK_SN | | | | | | | | Oct9 |
| E1 | E2 | E3 | E4 | E5 | E6 | E7 | R | Oct10 |
| ... | | | | | | | | ... |

It may be understood that, when E4, E5, E6, and E7 are defined, E1 may further indicate whether a set of E2 to E7 follows. Certainly, defining E4, E5, E6, and E7 is an example implementation. For example, another value of CPT except for 000 may also be reused for implementation. For example, if CPT is 001, it indicates that E4 exists after E1, if CPT is 010, it indicates that E5 exists after E1, and so on. Details are not described again.

It may be further understood that the foregoing status report is an example name, and may be replaced with any possible name, for example, a reception acknowledgment report or a packet loss report. This is not specifically limited.

In this embodiment of this application, the second communication apparatus may send the status report to the first communication apparatus by using any possible message, which may be an existing message such as an RRC message, a MAC-CE message, or a DCI message, or may be a message newly defined in the future. Correspondingly, the first communication apparatus may receive the status report by using a corresponding message.

FIG. 7 is a schematic flowchart 3 of a communication method according to an embodiment of this application. The communication method is applicable to the foregoing communication system, and mainly relates to interaction between a first communication apparatus and a second communication apparatus.

Specifically, as shown in FIG. 7, a procedure of the communication method is as follows.

S701: The first communication apparatus obtains a PDCP PDU.

A PDCP entity of the first communication apparatus may obtain the PDCP PDU.

S702: The first communication apparatus determines an RLC PDU based on the PDCP PDU.

An RLC SDU in which the RLC PDU is located shares a sequence number with the PDCP PDU. In other words, that the RLC SDU shares the sequence number with the PDCP PDU means that a sequence number of the PDCP PDU is the same as a sequence number of the RLC SDU. When the PDCP entity of the first communication apparatus transfers the PDCP PDU to an RLC entity of the first communication apparatus, the PDCP entity of the first communication apparatus may further transfer the sequence number of the PDCP PDU to the RLC entity of the first communication apparatus. The RLC entity of the first communication apparatus may generate the RLC SDU based on the PDCP PDU, and encapsulate the sequence number of the PDCP PDU as the sequence number of the RLC SDU into the RLC SDU. Then, the RLC entity of the first communication apparatus may segment the RLC SDU in a segmentation manner in the conventional technology or in the segmentation manner in this embodiment of this application, to obtain the RLC PDU.

It may be understood that the foregoing manners are merely some examples. For example, the PDCP PDU may not include a sequence number, and the sequence number may be separately maintained. For example, the sequence number is separately maintained in a specified area of a memory or the sequence number is separately maintained in a specified process, and the sequence number is transferred together with the PDCP PDU when necessary, indicating that the sequence number indicates the sequence number of the PDCP PDU. For another example, the PDCP entity and the RLC entity of the first communication apparatus may be decoupled, and are separately located on different entity apparatuses. For example, the first communication apparatus includes a CU and a DU, the PDCP entity of the first communication apparatus is located on the CU, and the RLC entity of the first communication apparatus is located on the DU.

S703: The first communication apparatus sends the RLC PDU. The second communication apparatus receives the RLC PDU.

S704: The second communication apparatus determines the PDCP PDU based on the RLC PDU. The RLC entity of the second communication apparatus may process the received RLC PDU to obtain the RLC SDU. For details, refer to the related descriptions in FIG. 5. Details are not described herein again. When the RLC entity of the second communication apparatus transfers the RLC SDU to a PDCP entity of the second communication apparatus, the RLC entity of the second communication apparatus may further transfer the sequence number of the RLC SDU to the PDCP entity of the second communication apparatus. The PDCP entity of the second communication apparatus may generate the PDCP PDU based on the RLC SDU, perform PDCP PDU sorting by using the sequence number of the RLC SDU as the sequence number of the PDCP PDU, and submit the PDCP PDU for processing.

It may be understood that, because encryption and integrity protection functions are still performed at a PDCP layer, the second communication apparatus needs to perform encryption and integrity protection on the PDCP PDU when receiving the sequence number of the RLC SDU.

In conclusion, because the RLC SDU in which the RLC PDU is located shares the sequence number with the PDCP PDU, the first communication apparatus or a second communication apparatus locally maintains only one sequence number, or maintains the RLC PDU and the PDCP PDU by using a same sequence number. Compared with the conventional technology, reducing one sequence number can still implement interaction between a PDCP entity and an RLC entity, thereby reducing overheads and improving running efficiency.

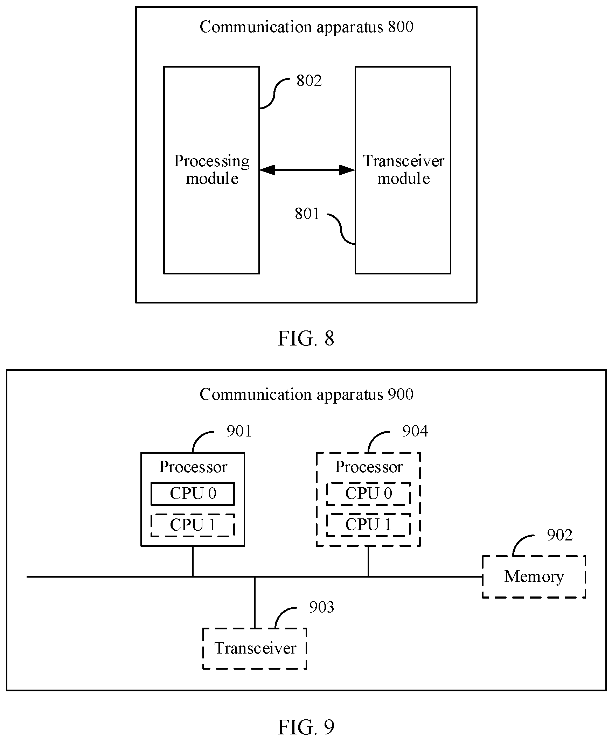

With reference to FIG. 5 to FIG. 7, the foregoing describes in detail the communication method provided in embodiments of this application. With reference to FIG. 8 and FIG. 9, the following describes in detail communication apparatuses configured to perform the communication method provided in embodiments of this application.

FIG. 8 is a diagram 1 of a structure of a communication apparatus according to an embodiment of this application. For example, as shown in FIG. 8, the communication apparatus 800 includes a transceiver module 801 and a processing module 802. For ease of description, FIG. 8 shows only main components of the communication apparatus.

The transceiver module 801 may be configured to perform receiving and sending functions of the first communication apparatus or the second communication apparatus in the methods shown in FIG. 5 to FIG. 7, and the processing module 802 may be configured to perform other functions of the first communication apparatus or the second communication apparatus in the methods shown in FIG. 5 to FIG. 7 other than the receiving and sending functions.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 may perform the functions in the method shown in FIG. 5 to FIG. 7.

It may be understood that the communication apparatus 800 may be a network device or an apparatus related to the network device, or may be a chip (system) or another part or component that may be disposed in a network device or an apparatus related to the network device, or may be an apparatus including a network device or an apparatus related to the network device. This is not limited in this application. Alternatively, the communication apparatus 800 may be a terminal or an apparatus corresponding to the terminal, or may be a chip (system) or another part or component that may be disposed in a terminal or an apparatus corresponding to the terminal, or may be an apparatus including a terminal or an apparatus corresponding to the terminal. This is not limited in this application.

In addition, for technical effects of the communication apparatus 800, refer to the technical effects of the foregoing communication method. Details are not described herein again.

FIG. 9 is a diagram 2 of a structure of a communication apparatus according to an embodiment of this application. For example, the communication apparatus may be a network device or an apparatus related to the network device, or may be a chip (system) or another part or component that may be disposed in a network device or an apparatus related to the network device, or may be an apparatus including a network device or an apparatus related to the network device. This is not limited in this application. Alternatively, the communication apparatus may be a terminal or an apparatus corresponding to the terminal, or may be a chip (system) or another part or component that may be disposed in a terminal or an apparatus corresponding to the terminal, or may be an apparatus including a terminal or an apparatus corresponding to the terminal. This is not limited in this application. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, through a communication bus.

The following describes the components of the communication apparatus 900 in detail with reference to FIG. 9.

The processor 901 is a control center of the communication apparatus 900, and may be one processor, or may be a collective term for a plurality of processing elements. For example, the processor 901 is one or more central processing units (central processing unit, CPU), may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 901 may perform various functions of the communication apparatus 900 by running or executing a software program stored in the memory 902 and invoking data stored in the memory 902, for example, perform the communication methods shown in FIG. 5 to FIG. 7.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store a software program for performing the solutions in this application, and the processor 901 controls execution. For a specific implementation, refer to the foregoing method embodiment. Details are not described herein again.

Optionally, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or data structures and that is accessible to a computer, but is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal, and the transceiver 903 may be configured to communicate with a network device or communicate with another terminal device. For another example, the communication apparatus 900 is a network device, and the transceiver 903 may be configured to communicate with a terminal or communicate with another network device.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It may be understood that a structure of the communication apparatus 900 shown in FIG. 9 does not constitute a limitation on the communication apparatus. An actual communication apparatus may include more or fewer components than those shown in the figure, or combine some components, or have different component arrangements.

In addition, for technical effects of the communication apparatus 900, refer to the technical effects of the method in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a single item (piece) or any combination of a plurality of items (pieces). For example, at least one of a, b, or c may represent a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. In the several embodiments provided in this application, it should be understood that the disclosed system, apparatus, and method may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first communication apparatus, wherein the method comprises:
obtaining, by the first communication apparatus, M radio link control protocol data units RLC PDUs, wherein the M RLC PDUs are obtained by segmenting one radio link control service data unit RLC SDU based on a preset data size and/or a preset segment quantity, and M is an integer greater than 1; and
sending, by the first communication apparatus, the M RLC PDUs to a second communication apparatus.

2. The method according to claim 1, wherein sizes of at least some of the M RLC PDUs are the same.

3. The method according to claim 1 or 2, wherein the preset data size is determined based on at least one of the following: a size of the RLC SDU, quality of communication between the first communication apparatus and the second communication apparatus, and a coverage enhancement level CE of the first communication apparatus or the second communication apparatus.

4. The method according to claim 1 or 2, wherein the preset segment quantity is determined based on at least one of the following: a size of the RLC SDU, quality of communication between the first communication apparatus and the second communication apparatus, and a CE of the first communication apparatus or the second communication apparatus.

5. The method according to any one of claims 1 to 4, wherein the method further comprises:
sending, by the first communication apparatus, first configuration information to the second communication apparatus, wherein the first configuration information indicates that segmentation of an RLC SDU is based on a segment data size and/or a segment quantity.

6. The method according to claim 5, wherein the method further comprises:
sending, by the first communication apparatus, second configuration information to the second communication apparatus, wherein the second configuration information indicates that the segment data size is the preset data size and/or the segment quantity is the preset segment quantity.

7. The method according to any one of claims 1 to 4, wherein an RLC PDU in the M RLC PDUs comprises first indication information, and the first indication information indicates that segmentation of an RLC SDU is based on a segment data size and/or a segment quantity.

8. The method according to claim 7, wherein the RLC PDU in the M RLC PDUs comprises second indication information, and the second indication information indicates that the segment data size is the preset data size and/or the segment quantity is the preset segment quantity.

9. The method according to any one of claims 1 to 8, wherein an i^{th} RLC PDU in the M RLC PDUs carries a sequence number of the i^{th} RLC PDU, and i is any integer from 1 to M.

10. The method according to any one of claims 1 to 9, wherein the method further comprises:
receiving, by the first communication apparatus, a status report from the second communication apparatus, wherein the status report indicates that packet loss occurs in at least one RLC SDU; and
retransmitting, by the first communication apparatus, the at least one RLC SDU to the second communication apparatus.

11. The method according to claim 10, wherein the status report specifically indicates a difference between a sequence number of each of the at least one RLC SDU and a sequence number of an acknowledged RLC SDU.

12. The method according to claim 10 or 11, wherein the status report further indicates an unsuccessfully received RLC PDU in a first RLC SDU, and the first RLC SDU belongs to the at least one RLC SDU.

13. The method according to claim 12, wherein
the status report specifically indicates a location, in the first RLC SDU, of the first data or the last data in the unsuccessfully received RLC PDU; or
the status report specifically indicates a sequence number of the unsuccessfully received RLC PDU; or
when the unsuccessfully received RLC PDU comprises a plurality of consecutive RLC PDUs, the status report specifically indicates a sequence number of an RLC PDU having a smallest sequence number and a sequence number of an RLC PDU having a largest sequence number in the plurality of RLC PDUs, or the status report specifically indicates a sequence number of an RLC PDU having a smallest sequence number in the plurality of RLC PDUs and a quantity of the plurality of RLC PDUs.

14. The method according to claim 10, wherein the at least one RLC SDU comprises a plurality of consecutive RLC SDUs.

15. The method according to claim 14, wherein the status report specifically indicates a quantity of the plurality of RLC SDUs and a difference between a sequence number of an RLC SDU in which packet loss occurs and a sequence number of an acknowledged RLC SDU, and the RLC SDU in which packet loss occurs is an RLC SDU having a smallest sequence number or an RLC SDU having a largest sequence number in the plurality of RLC SDUs.

16. The method according to claim 15, wherein
the status report specifically indicates a location, in the RLC SDU having the smallest sequence number, of the first data in the RLC SDU having the smallest sequence number; and a location, in the RLC SDU having the largest sequence number, of the last data in the RLC SDU having the largest sequence number; or
the status report specifically indicates a sequence number of the first lost RLC PDU in the RLC SDU having the smallest sequence number and a sequence number of the last lost RLC PDU in the RLC SDU having the largest sequence number.

17. A communication method, applied to a second communication apparatus, wherein the method comprises:
receiving, by the second communication apparatus, M radio link control protocol data units RLC PDUs from a first communication apparatus, wherein the M RLC PDUs are obtained by segmenting one radio link control service data unit RLC SDU based on a preset data size and/or a preset segment quantity, and M is an integer greater than 1; and
processing, by the second communication apparatus, the M RLC PDUs based on the preset data size and/or the preset segment quantity.

18. The method according to claim 17, wherein sizes of at least some of the M RLC PDUs are the same.

19. The method according to claim 17 or 18, wherein the preset data size is determined based on at least one of the following: quality of communication between the first communication apparatus and the second communication apparatus, and a coverage enhancement level CE of the first communication apparatus or the second communication apparatus.

20. The method according to claim 17 or 18, wherein the preset segment quantity is determined based on at least one of the following: quality of communication between the first communication apparatus and the second communication apparatus, and a CE of the first communication apparatus or the second communication apparatus.

21. The method according to any one of claims 17 to 20, wherein the method further comprises:
receiving, by the second communication apparatus, first configuration information from the first communication apparatus, wherein the first configuration information indicates that segmentation of an RLC SDU is based on a segment data size and/or a segment quantity.

22. The method according to claim 21, wherein the method further comprises:
receiving, by the second communication apparatus, second configuration information from the first communication apparatus, wherein the second configuration information indicates that the segment data size is the preset data size and/or the segment quantity is the preset segment quantity.

23. The method according to any one of claims 17 to 20, wherein an RLC PDU in the M RLC PDUs comprises first indication information, and the first indication information indicates that segmentation of an RLC SDU is based on a segment data size and/or a segment quantity.

24. The method according to claim 23, wherein the RLC PDU in the M RLC PDUs comprises second indication information, and the second indication information indicates that the segment data size is the preset data size and/or the segment quantity is the preset segment quantity.

25. The method according to any one of claims 17 to 24, wherein an i^{th} RLC PDU in the M RLC PDUs carries a sequence number of the i^{th} RLC PDU, and i is any integer from 1 to M.

26. The method according to any one of claims 17 to 25, wherein the method further comprises:
determining, by the second communication apparatus, that packet loss occurs in at least one RLC SDU sent by the first communication apparatus; and
sending, by the second communication apparatus, a status report to the first communication apparatus, wherein the status report indicates that packet loss occurs in the at least one RLC SDU.

27. The method according to claim 26, wherein the status report specifically indicates a difference between a sequence number of each of the at least one RLC SDU and a sequence number of an acknowledged RLC SDU.

28. The method according to claim 26 or 27, wherein the status report further indicates an unsuccessfully received RLC PDU in a first RLC SDU, and the first RLC SDU belongs to the at least one RLC SDU.

29. The method according to claim 28, wherein
the status report specifically indicates a location, in the first RLC SDU, of the first data or the last data in the unsuccessfully received RLC PDU; or
the status report specifically indicates a sequence number of the unsuccessfully received RLC PDU; or
when the unsuccessfully received RLC PDU comprises a plurality of consecutive RLC PDUs, the status report specifically indicates a sequence number of an RLC PDU having a smallest sequence number and a sequence number of an RLC PDU having a largest sequence number in the plurality of RLC PDUs, or the status report specifically indicates a sequence number of an RLC PDU having a smallest sequence number in the plurality of RLC PDUs and a quantity of the plurality of RLC PDUs.

30. The method according to claim 26, wherein the at least one RLC SDU comprises a plurality of consecutive RLC SDUs.

31. The method according to claim 30, wherein the status report specifically indicates a quantity of the plurality of RLC SDUs and a difference between a sequence number of an RLC SDU in which packet loss occurs and a sequence number of an acknowledged RLC SDU, and the RLC SDU in which packet loss occurs is an RLC SDU having a smallest sequence number or an RLC SDU having a largest sequence number in the plurality of RLC SDUs.

32. The method according to claim 31, wherein
the status report specifically indicates a location, in the RLC SDU having the smallest sequence number, of the first data in the RLC SDU having the smallest sequence number; and a location, in the RLC SDU having the largest sequence number, of the last data in the RLC SDU having the largest sequence number; or
the status report specifically indicates a sequence number of the first lost RLC PDU in the RLC SDU having the smallest sequence number and a sequence number of the last lost RLC PDU in the RLC SDU having the largest sequence number.

33. A communication apparatus, wherein the apparatus comprises a module configured to perform the method according to any one of claims 1 to 32.

34. A communication apparatus, wherein the communication apparatus comprises a processor and a memory, the memory is configured to store computer instructions, and when the processor executes the instructions, the communication apparatus is caused to perform the method according to any one of claims 1 to 32.

35. A computer-readable storage medium, wherein the computer-readable storage medium comprises a computer program or instructions, and when the computer program or the instructions are run by a computer, the computer is caused to perform the method according to any one of claims 1 to 32.

36. A computer program product, comprising a computer program or instructions, wherein when the computer program or the instructions are run by a computer, the computer is caused to perform the method according to any one of claims 1 to 32.
